(19) Europäisches Patentamt
European Patent Office
Office européen des brevets

(11) EP 3 283 541 B1

(12) **EUROPÄISCHE PATENTSCHRIFT**

(45) Veröffentlichungstag und Bekanntmachung des Hinweises auf die Patenterteilung:
**07.06.2023 Patentblatt 2023/23**

(21) Anmeldenummer: **16713787.6**

(22) Anmeldetag: **21.03.2016**

(51) Internationale Patentklassifikation (IPC):
***C08G 18/76*** (2006.01) ***C08G 8/10*** (2006.01)
***C08G 18/54*** (2006.01) ***C08L 61/06*** (2006.01)
***B22C 1/22*** (2006.01)

(52) Gemeinsame Patentklassifikation (CPC):
**B22C 1/2253; B22C 1/2273; C08G 8/10; C08G 18/542; C08G 18/7664; C08L 61/06**

(86) Internationale Anmeldenummer:
**PCT/EP2016/056120**

(87) Internationale Veröffentlichungsnummer:
**WO 2016/165916 (20.10.2016 Gazette 2016/42)**

(54) **PHENOLHARZ-KOMPOSITION ZUR VERWENDUNG IM POLYURETHAN-COLD-BOX- UND/ODER NO-BAKE-VERFAHREN SOWIE ENTSPRECHENDE ZWEIKOMPONENTEN-BINDEMITTELSYSTEME, VERWENDUNGEN UND VERFAHREN**

PHENOLIC RESIN COMPOSITION FOR USE IN THE POLYURETHANE COLD-BOX AND/OR NO-BAKE PROCESS AND CORRESPONDING TWO-COMPONENT BINDER SYSTEMS, USES, AND PROCESSES

COMPOSITION DE RÉSINE PHÉNOLIQUE POUR UNE UTILISATION DANS LE PROCÉDÉ BOÎTE FROIDE DE POLYURETHANE ET/OU LE PROCÉDÉ DURCISSANT À FROID ET SYSTÈMES DE LIANT À DEUX COMPOSANTS CORRESPONDANTS, APPLICATIONS ET PROCÉDÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **14.04.2015 EP 15305547**

(43) Veröffentlichungstag der Anmeldung:
**21.02.2018 Patentblatt 2018/08**

(73) Patentinhaber: **HÜTTENES-ALBERTUS Chemische Werke Gesellschaft mit beschränkter Haftung**
**40549 Düsseldorf (DE)**

(72) Erfinder:
- **VARGAS, Manuel**
  **60700 Pont-Sainte-Maxence (FR)**
- **LO, Tung-Fai**
  **60940 Angicourt (FR)**

(74) Vertreter: **Eisenführ Speiser**
**Patentanwälte Rechtsanwälte PartGmbB**
**Postfach 10 60 78**
**28060 Bremen (DE)**

(56) Entgegenhaltungen:
**DE-A1-102004 057 671**
**US-A- 5 160 503**
**US-A- 5 552 488**
**US-A- 5 795 933**
**US-A1- 2013 292 083**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Processed by Luminess, 75001 PARIS (FR)

**Beschreibung**

Die vorliegende Erfindung betrifft eine Phenolharz-Komposition zur Verwendung im Polyurethan-Cold-Box-Verfahren, ein Zweikomponenten-Bindemittelsystem zur Verwendung im Polyurethan-Cold-Box-Verfahren, eine Verwendung einer C-H-aciden Verbindung als Formaldehyd-Fänger zur Herstellung einer Phenolharz-Komposition zur Verwendung im Polyurethan-Cold-Box-Verfahren, ein Verfahren zur Herstellung einer Phenolharz-Komposition, ein Verfahren zur Herstellung eines Zweikomponenten-Bindemittelsystems und ein Verfahren zur Herstellung eines Speisers, einer Gießereiform oder eines Gießereikerns aus einer Formstoffmischung sowie schließlich entsprechende Speiser, Gießereiformen und Gießereikerne.

Die Erfindung wird in den Ansprüchen definiert, und nachfolgend sind spezifische Aspekte der Erfindung definiert und beschrieben.

Bei der Herstellung von Speisern, Gießereiformen und Gießereikernen werden in großem Umfang Bindemittel-Systeme auf Polyurethan-Basis eingesetzt, und zwar insbesondere zur Form- und Kern-Herstellung nach dem Polyurethan-Cold-Box-Verfahren. Bindemittelsysteme für das Polyurethan-Cold-Box-Verfahren umfassen typischerweise zwei Bindemittelkomponenten, nämlich:

(1) eine Phenolharz-Komposition als Polyolkomponente (= Phenolharzkomponente)
und

(2) eine Polyisocyanat-Komponente umfassend ein Polyisocyanat mit mindestens zwei Isocyanat-Gruppen pro Molekül.

Diese Komponenten sind gegebenenfalls lösungsmittelhaltig und werden regelmäßig in separaten Gebinden verpackt und vertrieben.

Bevorzugt umfasst die als Polyolkomponente (= Phenolharzkomponente) eingesetzte Phenolharz-Komposition ein ortho-kondensiertes phenolisches Resol, d. h. ein Phenolharz des Benzyletherharz-Typs. Hierbei handelt es sich um ein Kondensationsprodukt von

(i) einem oder mehreren Phenol(en) der allgemeinen Formel I

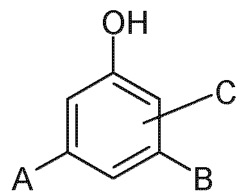

Formel I

in der A, B und C unabhängig voneinander Wasserstoff, ungesättigte oder gesättigte aliphatische Gruppen mit maximal 16 C-Atomen bedeuten, wobei die aliphatischen Gruppen vorzugsweise Alkylgruppen sind, die bevorzugt ausgewählt sind aus der Gruppe bestehend aus Methyl, Ethyl, n-Propyl, i-Propyl, n-Butyl, i-Butyl, tert-Butyl, Octyl und Nonyl, oder olefinische Gruppen sind,

(ii) mit einem oder mehreren Aldehyd(en) der allgemeinen Formel R'CHO, in der R' ein Wasserstoffatom oder eine Alkylgruppe mit 1-8 Kohlenstoffatomen ist.

Beispiele geeigneter Phenole, welche unter die Formel I fallen, sind Phenol ($C_6H_5OH$), o-Kresol, m-Kresol, p-Kresol, p-Butylphenol, p-Octylphenol, p-Nonylphenol und Cardanol (Bezeichung für Verbindungen der Formel I, wobei B eine aliphatische, unverzweigte Gruppe mit 15 C-Atomen und 0, 1, 2 oder 3 Doppelbindungen ist); von diesen sind Phenol ($C_6H_5OH$), o-Kresol und Cardanol bevorzugt, Phenol ($C_6H_5OH$) ist besonders bevorzugt.

Als Aldehyd ist Formaldehyd bevorzugt, welches auch in Form von Paraformaldehyd eingesetzt werden kann. Besonders bevorzugt wird in der Praxis (i) Formaldehyd als einziges Aldehyd eingesetzt oder (ii) Formaldehyd in Kombination mit einem oder mehr weiteren Aldehyden eingesetzt.

Die vorstehenden Angaben zu bevorzugten Phenolen und Aldehyden sowie zu daraus resultierenden bevorzugten ortho-kondensierten phenolischen Resolen (d.h. Phenolharzen des Benzyletherharz-Typs) gelten auch für die erfindungsgemäßen PhenolharzKompositionen, die nachfolgend im Detail beschrieben sind. Die vorliegende Erfindung

betrifft dabei ortho-kondensierte phenolische Resole, zu deren Herstellung Formaldehyd eingesetzt wird.

Die Umsetzung von (i) Phenolen der angegebenen allgemeinen Formel I mit (ii) Aldehyden (insbesondere Formaldehyd) erfolgt dabei bevorzugt in der flüssigen Phase, typischerweise bei einer Temperatur unterhalb von 130 °C. Der Reaktionsmischung werden katalytische Mengen an ortho-dirigierenden, zweiwertigen Metallionen wie $Zn^{2+}$ zugesetzt.

Bevorzugte ortho-kondensierte phenolische Resole, d.h. Benzylether-Harze, entsprechen der folgenden allgemeinen Formel II:

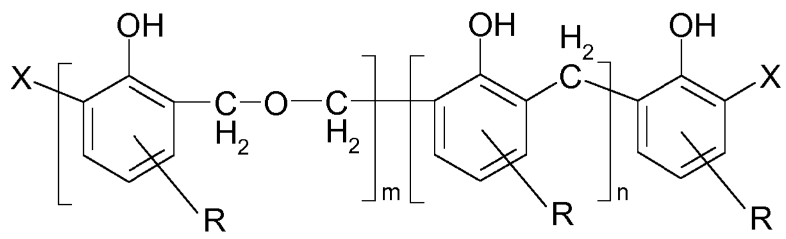

Formel II

Hierin ist R Wasserstoff oder ein Substituent in meta- oder para-Stellung zur phenolischen Hydroxy-Gruppe, bevorzugt aus der Gruppe bestehend aus Methyl, *n*-Butyl, *i*-Butyl, tert-Butyl, Octyl, Nonyl sowie (wie bei Einsatz von Cardanol resultierend) Pentadecenyl, Pentadecadienyl und Pentadecatrienyl; die Summe von m und n beträgt mindestens 2 und das Verhältnis m/n ist mindestens 1. X ist Wasserstoff, $CH_2OH$ (Methylolgruppe, resultiert aus der Umsetzung von Formaldehyd) oder eine veretherte Methylolgruppe (resultiert aus der Umsetzung von Formaldehyd in Gegenwart eines Alkohols).

Bevorzugte Ausgestaltungen von Verbindungen der Formel II ergeben sich durch Auswahl bevorzugter Phenole der Formel I und bei Einsatz von Formaldehyd, gegebenenfalls in Gegenwart von Alkohol, insbesondere bei Auswahl von Phenol ($C_6H_5OH$). Diese Auswahl in Kombination mit dem Einsatz von Formaldehyd ist im Rahmen der vorliegenden Erfindung besonders bevorzugt. Bei Einsatz von Formaldehyd, d.h. bei Herstellung eines Phenol-Formaldehyd-Harzes, verbleiben in der Produktmischung größere Mengen an Formaldehyd, die bislang insbesondere industriell nicht vollständig abtrennbar waren.

In der Patentliteratur finden sich zahlreiche Beschreibungen zur Herstellung solcher Harze. Als Beispiele seien hier US 3,485,797, EP 1,057,554 und EP 771,599 genannt.

In einer Phenolharz-Komposition werden ortho-kondensierte phenolische Resole, d.h. Benzylether-Harze, üblicherweise in Verbindung mit sonstigen Bestandteilen eingesetzt, z.B. in Kombination mit einem organischen Lösungsmittel, d.h. in Form einer Lösung. Das Lösungsmittel wird häufig eingesetzt, um die Viskosität der resultierenden Phenolharz-Komposition für die Vermischung mit einem Formstoff in geeigneter Weise einzustellen. Als sonstige Bestandteile einer ein ortho-kondensiertes phenolisches Resol umfassenden Phenolharz-Komposition werden in manchen Fällen auch andere Harze, z.B. Novolake, eingesetzt. Die vorstehenden Angaben zu sonstigen Bestandteilen gelten auch für die vorliegende Erfindung, die nachfolgend im Detail beschrieben wird.

Die Polyisocyanatkomponente eines Zweikomponenten-Bindemittelsystem zur Verwendung im Polyurethan-Cold-Box-Verfahren umfasst üblicherweise ein aromatisches Polyisocyanat mit vorzugsweise zwei bis fünf Isocyanat-Gruppen; es können auch Mischungen solcher Polyisocyanate eingesetzt werden. Besonders bevorzugt sind Diphenylmethan-Diisocyanat (MDI), Triphenylmethan-Triisocyanat, Polymethylen-Polyphenyl-Isocyanate (polymeres MDI) und deren Mischungen.

Das Polyisocyanat wird regelmäßig in Konzentrationen eingesetzt, die ausreichen, das Aushärten des bzw. der Phenolharze(s) zu bewirken. Vorzugsweise werden 10-500 Gew.-%, vorzugsweise 20-300 Gew.-% Polyisocyanat eingesetzt, bezogen auf die eingesetzte Masse an ortho-kondensiertem phenolischen Resol (als Bestandteil der Phenolharz-Komposition). Das Polyisocyanat wird bevorzugt in flüssiger Form eingesetzt; flüssige Polyisocyanate können in unverdünnter Form eingesetzt werden, feste oder hochviskose flüssige Polyisocyanate werden üblicherweise in Form einer Lösung in einem organischen Lösungsmittel eingesetzt, wobei das Lösungsmittel bis zu 80 Gew.-% der Polyisocyanat-Komponente ausmachen kann.

Die vorstehenden Ausführungen zur Polyisocyanat-Komponente und ihrem Einsatz gelten auch für die erfindungsgemäßen Zweikomponenten-Bindemittelsysteme, die nachfolgend detaillierter beschrieben werden.

Üblicherweise werden in der Praxis Gemische von Lösungsmitteln eingesetzt, die auf das jeweilige Bindemittelsystem (Phenolharz und Polyisocyanat) abgestimmt sind.

Als unpolare, aromatenhaltige Lösungsmittel werden in der Phenolharz-Komponente und in der Polyisocyanat-Komponente bevorzugt Gemische von hochsiedenden aromatischen Kohlenwasserstoffen eingesetzt, d.h. Gemische aromatischer Kohlenwasserstoffe mit einem Siedebereich oberhalb von etwa 150 °C bei Normaldruck (z.B. Solvent Naphta, CAS-Nummer 64742-94-5).

EP1057554 lehrt die bevorzugte Verwendung von Alkylsilikaten, Alkylsilikat-Oligomeren und deren Gemischen. Diese Lösungsmittel werden in der Praxis in der PhenolharzKomponente und in der Polyisocyanat-Komponente eingesetzt.

Als polare Lösungsmittel kommen u.a. bestimmte ausreichend hochsiedende Ester zum Einsatz, wie z.B. die in der DE-PS 27 59 262 beschriebenen "symmetrischen" Ester, bei denen sowohl der Säurerest als auch der Alkoholrest eine im gleichen Bereich liegende, relativ große Anzahl von C-Atomen (etwa 6 bis 13 C-Atome) aufweist.

Auch Fettsäurealkylester, z.B. die in der EP 0 771 559 beschriebenen Methylmonoester von einer oder mehreren Fettsäuren mit einer Kohlenstoffkette ab 12 C-Atomen sind geeignete Lösungsmittel(-Bestandteile), beispielsweise Rapsölmethylester.

Die vorstehenden Angaben bezüglich der Lösungsmittel gelten auch für die erfindungsgemäße Phenolharz-Komposition und das erfindungsgemäße Zweikomponenten-Bindemittelsystem, die nachfolgend im Detail beschrieben sind.

Bei allen Vorteilen von Bindemittel-Systemen auf Polyurethan-Basis für die Gießereitechnik (insbesondere solchen, welche eine vorstehend beschriebene PhenolharzKomponente und/oder eine vorstehend beschriebene Polyisocyanat-Komponente umfassen) wird es doch stets als Nachteil empfunden, dass es beim Verarbeiten von Phenol-Formaldehyd-Harzen zu Formaldehydemissionen kommt. Diese Emissionen beim Verarbeiten, aber auch Ausdünstungen und Ausgasungen nach der Speiser-, Kern- oder Formherstellung im Polyurethan-Cold-Box-Verfahren stellen eine erhebliche Arbeitsplatzbelastung dar, die zumeist nicht ausreichend durch Schutzmaßnahmen wie Abzugshauben oder dergleichen abgefangen werden kann.

Dies ist insbesondere wichtig, da Produkte (z.B. Phenolharz-Kompositionen) mit einem Anteil von größer als 0,1 Gew.-% an freiem Formaldehyd als gesundheitsschädlich eingestuft werden. Insbesondere ortho-kondensierte phenolische Resole, d.h. Benzylether-Harze, zu deren Herstellung Formaldehyd eingesetzt wird, werden insoweit als problematisch empfunden.

Es sind bereits spezifische Phenolharz-Kompositionen bekannt, die sogenannte Formaldehyd-Fänger (formaldehyde scavenger) und/oder andere Reaktionspartner für Formaldehyd umfassen, um den Anteil an freiem Formaldehyd in einem Phenol-FormaldehydHarz zu verringern.

So wird in der Phenolharzchemie besonders gern Harnstoff eingesetzt (vgl. J. of Trop.forest sc. Vol. 24, issue 3, p. 348: Addition of urea as formaldehyde scavenger). Harnstoff hat jedoch den Nachteil, dass er sich nicht in üblichen Cold-Box-Lösungsmitteln auflöst und zudem die Verarbeitungszeit (benchlife) der fertigen Sandmischung verkürzt.

US 5,358,748 betrifft "Aqueous mixture of water soluble phenol-formaldehyde resin, formaldehyde scavenger, strong acid, and having almost no alkyl amine, high speed, odorless curing" (Titel). Guanidin, Melamin oder Triazin werden dort u.a. als Formaldehyd-Fänger in wässrigen Resolen offenbart. Diese Formaldehyd-Fänger sind aus den gleichen Gründen wie Harnstoff nicht zur Verwendung im Cold-Box Verfahren (und somit nicht zur Verwendung in entsprechenden Phenolharz-Kompositionen) geeignet.

US 4,273,179 betrifft "Phenolic resin-polyisocyanate binder systems containing dibasic ester solvents" (Titel). Die Verwendung von "dibasic ester" mit 1 bis 4 Kohlenstoffatomen in Bindersystemen auf Polyurethan-Basis ist ebenfalls offenbart. Zudem offenbart ist eine "Resin Composition" umfassend ein Benzyletherharz, aromatische Lösungsmittel, Furfurylalkohol und als weiteres Lösungsmittel Diethylmalonat. Eine Umsetzung der Lösungsmittelbestandteile ist ebenso wie der Anteil an freiem Formaldehyd nicht offenbart. Das Benzyletherharz ("commercial benzylic ether resin") ist nicht weiter spezifiziert, so dass Rückschlüsse auf den darin enthaltenen Anteil an Formaldehyd nicht möglich sind.

FR 2 948 307 betrifft "Method for producing a body made from a granular mixture" (Titel). Carbohydrazide werden als Formaldehyd-Fänger in polykondensierten Harzen offenbart.

US 2013/0292083 A1 offenbart eine Polyisocyanat-Komponente für ein Formstoff-Bindemittelsystem bzw. eine Polyisocyanat enthaltende Lösung, ein Formstoff-Bindemittelsystem bzw. Zweikomponenten-Bindemittelsystem, dessen Verwendung zur Herstellung von Gießerei-Sandkernen und -formen nach dem Cold-Box-Verfahren, entsprechende Gießerei-Formstoffe und Gießerei-Sandkerne bzw. -formen und deren Herstellung sowie die Verwendung bestimmter Sulfonsäuren als Mittel zur Verlängerung der Sandlebenszeit

DE 10 2004 057 671 A1 offenbart Phenol-Formaldehydharze mit niedriger Viskosität, die z. B. als Komponente von Gießerei-Bindemittelsystemen Verwendung finden können, und Verfahren zur Herstellung solcher Phenol-Formaldehydharze.

US 5,552,488 offenbart ein Verfahren zum Vernetzen eines Polymers in Gegenwart einer β-Dicarbonlyverbindung.

Ein anderer Ansatz zur Senkung des Anteils an freiem Formaldehyd ist dessen Oxidation von Formaldehyd zu Ameisensäure (HCOOH) mittels Oxidationsmittel wie z. B. Peroxodisulfat (vgl. FR 1056171 A) oder Peroxiden (vgl. JP 49 25108 oder GB 1121649). Dies hat jedoch den Nachteil, dass die aus dem Formaldehyd durch Oxidation gebildete

Ameisensäure zum einen einen unangenehmen Geruch aufweist und zum anderen stark korrosiv ist. Zudem ist der Einsatz im Cold-Box-Verfahren nicht bevorzugt, denn die eingesetzten Oxidationsmittel können bei Anwesenheit von $Zn^{2+}$-Ionen zu einem Ausfällen von ZnO und damit verbunden zu einer Eintrübung des Produktes führen.

Es war eine primäre Aufgabe der vorliegenden Erfindung, eine Phenolharz-Komposition, umfassend ein ortho-kondensiertes phenolisches Resol mit veretherten und/oder freien Methylolgruppen, zur Verwendung im Polyurethan-Cold-Box-Verfahren bereitzustellen, die (wie vorstehend erläutert) durch Umsetzung von Formaldehyd hergestellt ist bzw. herstellbar ist, aber dennoch freies Formaldehyd in einer Menge von weniger als 0,1 Gew.-%, bevorzugt weniger als 0,08 Gew.-%, besonders bevorzugt weniger als 0,05 Gew.-% enthält und somit nicht mehr in besonderem Maße gesundheitsschädlich ist.

Es war eine weitere Aufgabe der vorliegenden Erfindung, ein entsprechendes Zweikomponenten-Bindemittelsystem zur Verwendung im Polyurethan-Cold-Box-Verfahren anzugeben, welches die gemäß der primären Aufgabe anzugebende Phenolharz-Komposition enthält.

Gemäß einem spezifischen Aspekt war es eine weitere Aufgabe der vorliegenden Erfindung, einen Formaldehyd-Fänger zur Herstellung einer Phenolharz-Komposition zur Verwendung im Polyurethan-Cold-Box-Verfahren anzugeben, der bzw. dessen Umsetzungsprodukte mit Formaldehyd in den besagten Verfahren und in den resultierenden Speisern, Formen oder Kernen nicht oder nur in akzeptablem Maße als störend empfunden wird bzw. werden.

Es war auch eine Aufgabe der vorliegenden Erfindung, ein Verfahren anzugeben zur Herstellung einer gemäß der primären Aufgabe anzugebenden Phenolharz-Komposition.

Es war auch eine Aufgabe der vorliegenden Erfindung, ein Verfahren anzugeben zur Herstellung eines gemäß der weiteren Aufgabe anzugebenden Zweikomponenten-Bindemittelsystems.

Es war auch eine Aufgabe der vorliegenden Erfindung, ein Verfahren zur Herstellung eines Speisers, einer Gießereiform oder eines Gießereikerns aus einer Formstoffmischung anzugeben, wobei die Formstoffmischung mittels eines gemäß der weiteren Aufgabe anzugebenden Zweikomponenten-Bindemittelsystems gebunden wird.

Und schließlich war es eine Aufgabe der vorliegenden Erfindung, entsprechende Speiser, Gießereiformen und Gießereikerne anzugeben, die gemäß dem anzugebenden Verfahren herstellbar sind.

Die primäre Aufgabe der vorliegenden Erfindung wird gelöst durch eine PhenolharzKomposition zur Verwendung im Polyurethan-Cold-Box-Verfahren, umfassend die folgenden Substanzen:

- ein ortho-kondensiertes phenolisches Resol mit veretherten und/oder freien Methylolgruppen in einer Gesamtmenge von 40 bis 60 Gew.-%, bezogen auf die Gesamtmasse der Phenolharz-Komposition,
- freies Formaldehyd in einer Menge von weniger als 0,1 Gew.-%, bevorzugt weniger als 0,08 Gew.-%, besonders bevorzugt weniger als 0,05 Gew.-%, jeweils bezogen auf die Gesamtmasse der Phenolharz-Komposition,
- ein oder mehrere Reaktionsprodukte von Formaldehyd mit einer oder mehreren C-H-aciden Eduktverbindungen wie in Anspruch 1 definiert,
- sonstige Bestandteile in einer Gesamtmenge von mindestens 38 Gew.-%,

wobei die Menge an Wasser in der Phenolharz-Komposition nicht größer ist als 1,0 Gew.- % (vorzugsweise nicht größer als 0,5 Gew.-%), jeweils bezogen auf die Gesamtmasse der Phenolharz-Komposition.

Der Ausdruck "ortho-kondensiertes phenolisches Resol mit veretherten und/oder freien Methylolgruppen" bezeichnet hierbei ein Phenolharz, dessen Moleküle

(a1)

(a1-i) durch Methylenether-Brücken in Ortho-Stellung verknüpfte,
(a1-ii) aus Phenol-Monomeren resultierende aromatische Ringe

und

(b1)

(b1-i) in Ortho-Stellung angeordnete,
(b1-ii) veretherte und/oder freie Methylolgruppen

aufweisen (vgl. auch Formel II).

Der Begriff "Phenol-Monomere" umfasst dabei sowohl (und insbesondere) unsubstituiertes Phenol ($C_6H_5OH$)

als auch substituierte Phenole, zum Beispiel o-Kresol, m-Kresol, p-Kresol, p-Butylphenol, p-Octylphenol, p-Nonylphenol und Cardanol (Bezeichung für Verbindungen der Formel I, wobei B eine aliphatische, unverzweigte Gruppe mit 15 C-Atomen und 0, 1, 2 oder 3 Doppelbindungen ist, insbesondere Pentadecenyl, Pentadecadienyl und Pentadecatrienyl); von diesen "Phenol-Monomeren" sind Phenol ($C_6H_5OH$), o-Kresol und Cardanol bevorzugt, Phenol ($C_6H_5OH$) ist besonders bevorzugt. Der Begriff "Ortho-Stellung" bezeichnet die Ortho-Stellung in Bezug auf die Hydroxygruppe des Phenols. Es ist dabei nicht ausgeschlossen, dass in den Molekülen der erfindungsgemäß einzusetzenden ortho-kondensierten phenolischen Resole auch

(a2) durch Methylengruppen verknüpfte aromatische Ringe (neben durch Methylenetherbrücken verknüpfte aromatischen Ringen (a1))
und/oder

(b2) endständige Wasserstoffatome in Ortho-Stellung (neben endständigen Methylolgruppen in Ortho-Stellung (b1))

vorliegen.

Der Ausdruck "veretherte und/oder freie Methylolgruppen" bezeichnet Substituenten der aromatischen Ringe mit der allgemeinen Formel $-CH_2OR$ (wobei R = ein Wasserstoffatom oder ein organischer Rest ist). Diese Substituenten der aromatischen Ringe sind vorzugsweise in Ortho-Stellung verknüpft. "Freie" Methylolgruppen sind dabei Substituenten, bei denen R ein Wasserstoffatom ist, und "veretherte" Methylolgruppen solche Substituenten, bei denen R ein organischer Rest ist.

Dabei ist in den Molekülen der erfindungsgemäß einzusetzenden ortho-kondensierten phenolischen Resole das Verhältnis von Methylenetherbrücken zu Methylenbrücken vorzugsweise mindestens 0,5, besonders bevorzugt mindestens 1, und das Verhältnis von endständigen Methylolgruppen in Ortho-Stellung zu endständigen Wasserstoffatomen in Ortho-Stellung vorzugsweise mindestens 0,5, besonders bevorzugt mindestens 1, ganz besonders bevorzugt mindestens 1,5, noch mehr bevorzugt mindestens 2.

Derartige Phenolharze werden, wie vorstehend bereits ausgeführt, auch als Benzylether-Harze bezeichnet. Sie sind erhältlich durch Polykondensation von Phenolen und Formaldehyd (gegebenenfalls in Form von Paraformaldehyd) im Mol-Verhältnis von 1:1 bis 1:2, bevorzugt 1:1,2 bis 1:1,5, katalysiert durch zweiwertige Metallionen (vorzugsweise $Zn^{2+}$) im schwach sauren Medium.

Die Methylolgruppen des Phenolharzes resultieren aus der Reaktion mit Formaldehyd; veretherte Methylolgruppen resultiert aus der Reaktion mit Formaldehyd in Gegenwart eines zur Veretherung führenden Alkohols.

Insbesondere bei der industriellen Herstellung relevanter ortho-kondensierter phenolischer Resole mit einem hohen Anteil an freien und/oder veretherten Methylolgruppen zur Verwendung im Cold-Box-Verfahren verbleiben Anteile an freiem Formaldehyd in der Produktmischung, welche nach der Polykondensation von Phenolen und Formaldehyd wie vorstehend beschrieben resultiert.

Der Begriff "ortho-kondensiertes phenolisches Resol" (englisch: ortho-condensed phenolic resole) umfasst gemäß dem üblichen fachmännischen Verständnis Verbindungen, wie sie in dem Lehrbuch "Phenolic Resins: A Century of progress" (Herausgeber: L. Pilato, Verlag: Springer, Jahr der Veröffentlichung: 2010) insbesondere auf Seite 477 durch Figur 18.22 offenbart sind. Der Begriff umfasst gleichermaßen die im VDG-Merkblatt R 305 "Urethan-Cold-Box-Verfahren" (Februar 1998) unter 3.1.1 angegebenen "Benzyletherharze (Ortho-Phenol-Resole)". Der Begriff umfasst zudem die in EP 1 057 554 B1 offenbarten "Phenolharze des Benzyletherharz-Typs", vgl. dort insbesondere die Absätze [0004] bis [0006].

Das erfindungsgemäß einzusetzende ortho-kondensierte phenolische Resol der Phenolharz-Komponente weist freie Methylolgruppen -CHzOH und/oder veretherte Methylolgruppen -CHzOR auf. In einer veretherten Methylolgruppe ist das Wasserstoffatom, welches in der freien Methylolgruppe -CHzOH an das Sauerstoffatom gebunden ist, durch einen Rest R ersetzt; veretherte Methylolgruppen enstehen bei Anwesenheit von Alkohol während der Reaktion des Formaldehyds mit dem eingesetzten Phenol. Dabei ist in einer ersten bevorzugten Alternative R ein Alkylrest, d.h. die Gruppen -CHzOR sind Alkoxymethylengruppen. Bevorzugt sind hierbei Alkylreste mit einem bis zehn Kohlenstoffatomen, bevorzugt aus der Gruppe bestehend aus Methyl, Ethyl, n-Propyl, i-Propyl, n-Butyl, i-Butyl, tert-Butyl, Octyl und Nonyl.

Der Begriff "freies Formaldehyd" bedeutet hier das in einem Harz molekular vorliegende Formaldehyd, welches mit einer KCN-Methode (s.u. Methode 2 in den Bespielen) bestimmt wird.

Der Begriff "C-H-acide Eduktverbindung" bezeichnet organische Verbindungen, die in der Lage sind, an einem Kohlenstoff-Atom gebundene Wasserstoffatome als Protonen abzugeben und damit formal als Säure zu fungieren.

Insbesondere sind C-H-acide Eduktverbindungen (wie in Anspruch 1 definiert) bevorzugt, welche sich gut mit erfindungsgemäßen Phenolharz-Kompositionen mischen.

Vorzugsweise werden C-H-acide Verbindungen (wie in Anspruch 1 definiert) verwendet,

- deren Flammpunkt größer als 60 °C ist und/oder
- die einen Siedepunkt im Bereich von Cold-Box-üblichen Lösungsmitteln, vorzugsweise von über 150 °C besitzen.

Die C-H-aciden Verbindungen (wie in Anspruch 1 definiert) sollen zudem vorzugsweise

- keinen CMR-Stoff der Kategorie 1A oder 1B darstellen,
- keinen unangenehmen Eigengeruch haben,
- die Viskosität des fertigen Harzes nicht erhöhen.

Die Erfindung beruht auf der überraschenden Erkenntnis, dass der Anteil an freiem Formaldehyd in Phenolharz-Kompositionen, die ortho-kondensiertes phenolisches Resol mit veretherten und/oder freien Methylolgruppen umfassen, durch Umsetzen mit einer oder mehreren C-H-aciden Verbindungen wie in Anspruch 1 definiert auf weniger als 0,1 Gew.-% gesenkt werden kann. Dabei entstehen ein oder mehrere Reaktionsprodukte des Formaldehyds mit der einen oder den mehreren C-H-aciden Eduktverbindungen wie in Anspruch 1 definiert. Dies war insbesondere überraschend, da nach allgemein bekannter Lehre (siehe Bayer/Walter, Lehrbuch der organischen Chemie, 20. Aufl., 1984, S. 307f) diese Art von Reaktion ohne den Zusatz einer Base nicht stattfindet. Häufig verwendete Basen zur Durchführung solcher Reaktionen sind Piperidin, Diethylamin oder $K_2CO_3$ (siehe hierzu: H. Gault et A. Roesch, memoires présentés soc. chim., 1987, 148, 1410). Solche Basen werden bei Herstellung einer erfindungsgemäßen Phenolharz-Komposition nicht zugegeben und die basischen Eigenschaften der Reaktionsmischung somit zum Zwecke der Umsetzung nicht verstärkt. Die bei der Umsetzung entstehenden Reaktionsprodukte haben sich zudem überraschenderweise bei Einsatz der resultierenden Phenolharz-Komposition im Polyurethan-Cold-Box-Verfahren als nicht störend erwiesen. Im Gegenteil bewirken die entstehenden Reaktionsprodukte des Formaldehyds mit der einen oder den mehreren C-H-aciden Eduktverbindungen wie in Anspruch 1 definiert verbesserte Zerfallseigenschaften von ausgehärteten entsprechenden Bindemittelsystemen; hierzu sei auf die detaillierten Ausführungen im Zusammenhang mit dem erfindungsgemäßen Zweikomponenten-Bindemittelsystem.

In der Literatur gibt es verschiedene Anhaltspunkte für die Verwendung C-H-acider Verbindungen als Formaldehyd-Fänger:

US 2011/0015341 A1 betrifft "Phenol-formaldehyde resins, method for the production thereof and use thereof as binders" (title). Die Verwendung von Acetylaceton, Methylacetoacetat oder 4-Oxopentanal in wässriger Lösung in Kombination mit einem anorganischen Salz (insbesondere einem Borat) bei der Herstellung von Phenol-FormaldehydHarzen wird offenbart. Als "formaldehyde collectors" werden Melamin und Harnstoff genannt.

EP 0138 448 B1 betrifft eine "Method for producing a self-contained pressure-sensitive copying material involving the removal of free formaldehyde from a formaldehydecontaining suspension of microcapsules" (Titel). Malonsäure, Acetylaceton, Malonamid, Diethylmalonat, Ethylacetonacetat, Cyclohexanon, Cyclopentanon, sowie cyclische Ketone und beta-Dicarbonylverbindungen im Allgemeinen werden als Formaldehyd-Fänger offenbart.

US 5,160,503 betrifft "Water-soluble blends of active methylene compounds and polyhydric alcohols as formaldehyde scavengers" (Titel). Die Verwendung von Dialkylmalonat in Kombination mit Acetylaceton als Formaldehyd-Fänger in wässrigen Lösungen wird offenbart.

US 2,212,506 betrifft "Preparation of methylene dialkyl malonates" (Titel) und offenbart die Herstellung von Methylenedialkylmalonaten durch Reaktion aus Dialkylmalonat mit Formaldehyd im alkalischen Milieu und annähernd wasserfreien Lösungsmitteln (<5% Wasser).

US 5,795,933 betrifft "Containing formaldehyde resin, formaldehyde scavenger and carrier" (Titel) und offenbart die Verwendung von Formaldehyd-Fängern mit wenigstem einem aktiven Methylengruppen-Wasserstoff wie zum Beispiel 1,3-Cyclohexandion, dimethylmalonat oder diethylmalonat in wässrigem Reaktionsmedium und bei einem alkalischen pH-Wert von ca. 7,2 bis 9,0.

Besonders bevorzugt ist eine erfindungsgemäße Phenolharz-Komposition (wie vorstehend definiert), wobei die Gesamtmenge von Reaktionsprodukten von Formaldehyd mit einer oder mehreren C-H-aciden Eduktverbindungen wie in Anspruch 1 definiert größer ist als 0,1 Gew.-%.

Eine solche Phenolharz-Komposition basiert auf einer Grundmischung, die neben einem ortho-kondensierten phenolischen Resol mit veretherten und/oder freien Methylolgruppen eine beträchtliche Menge an freiem Formaldehyd enthält. Es sei verwiesen auf die Ausführungen weiter unten zum erfindungsgemäßen Verfahren zur Herstellung einer (vorzugweise erfindungsgemäßen) Phenolharz-Komposition.

Besonders bevorzugt ist eine erfindungsgemäße Phenolharz-Komposition (wie vorstehend definiert, vorzugsweise wie vorstehend als bevorzugt definiert), wobei die sonstigen Bestandteile umfassen:

- eine oder mehrere C-H-acide Verbindungen wie in Anspruch 1 definiert, wobei der pKa der C-H-aciden Verbindungen vorzugsweise im Bereich von 5 bis 14 (vorzugsweise größer ist als 7, bevorzugt größer ist als 8) liegt, bezogen auf den aciden, an Kohlenstoff gebundenen Wasserstoff
  und/oder

- ein Lösungsmittel ausgewählt aus der Gruppe bestehend aus Fettsäurealkylester, Alkylsilikate, Alkylsilikat-Oligomere und deren Gemische.

Eine Phenolharz-Komposition, die (neben anderen Bestandteilen) Lösungsmittel umfasst, ist vorzugsweise auf eine für praktische Zwecke bevorzugte Viskosität eingestellt, so dass die Phenolharz-Komposition besser verarbeitet werden kann als die entsprechende Komposition ohne Lösungsmittel und mit einer entsprechend anderen Viskosität.

C-H-acide Verbindungen mit einem pKa über 14 sind zur Reaktion mit Formaldehyd in der Regel ungeeignet. Ihre Anwesenheit in einer erfindungsgemäßen PhenolharzKomposition ist zwar nicht ausgeschlossen, aber auch nicht bevorzugt.

Bevorzugt ist eine erfindungsgemäße Phenolharz-Komposition (wie vorstehend definiert, vorzugsweise wie vorstehend als bevorzugt definiert), wobei die oder zumindest eine der C-H-aciden Verbindungen identisch ist mit der C-H-aciden Eduktverbindung wie in Anspruch 1 definiert des oder eines der Reaktionsprodukte.

Vorzugsweise korrespondiert jede der in der Phenolharz-Komposition anwesenden C-H-acide Verbindungen wie in Anspruch 1 definiert mit einem ebenfalls in der PhenolharzKomposition anwesenden Reaktionsprodukt von Formaldehyd; bei solchen Ausgestaltungen trägt jede eingesetzte C-H-acide Verbindung (wie in Anspruch 1 definiert) dazu bei, den Formaldehydgehalt der Phenolharz-Komposition zu reduzieren.

In einer erfindungsgemäßen Phenolharz-Komposition (wie vorstehend definiert, vorzugsweise wie vorstehend als bevorzugt definiert) ist die oder zumindest eine der C-H-aciden Eduktverbindungen eine zur Enolatbildung befähigte Carbonylverbindung, vorzugsweise eine beta-Dicarbonylverbindung.

Es versteht sich, dass eine solche zur Enolatbildung befähigte Carbonylverbindung, vorzugsweise eine beta-Dicarbonylverbindung, ein bevorzugter sonstiger Bestandteil der erfindungsgemäßen Phenolharz-Komposition ist.

Ganz besonders ist eine erfindungsgemäße Phenolharz-Komposition (wie vorstehend definiert, vorzugsweise wie vorstehend als bevorzugt definiert) bevorzugt, wobei die oder zumindest eine der C-H-aciden Eduktverbindungen (wie in Anspruch 1 definiert) ausgewählt ist aus der Gruppe bestehend aus Dialkylmalonat, vorzugsweise Diethylmalonat und Dimethylmalonat.

Diese Verbindungen sind jeweils ein bevorzugter sonstiger Bestandteil der erfindungsgemäßen Phenolharz-Komposition.

Diethylmalonat und Dimethylmalonat enthalten keine Stickstoffatome, welche als Lewis-Base fungieren können; vermutlich deshalb sind sie besonders für PhenolharzKompositionen geeignet, die zur Verwendung im Polyurethan-Cold-Box-Verfahren vorgesehen sind. Vergleichsverbindungen, deren Stickstoffatome als Lewis-Base fungieren können, sind zum Beispiel Harnstoff, Guanidin, Melamin oder Triazin. Diese Verbindungen haben sich in eigenen Untersuchungen als nicht für das Cold-Box-Verfahren geeignet erwiesen, da sie die Sandlebenszeit der fertigen Sandmischung verkürzen (siehe oben).

Zu den Reaktionsprodukten bei Verwendung eines Malonsäureesters als C-H-acide Eduktverbindung gehören insbesondere 2-Methylenmalonester, 2,2-Bis(hydroxymethyl)malonester, 2-(Hydroxymethyl)malonester und 2-(3-Hydroxy-2-oxa-propyl)malonester.

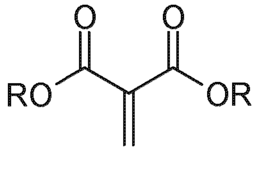
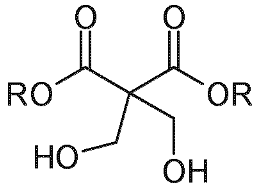

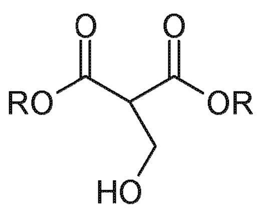
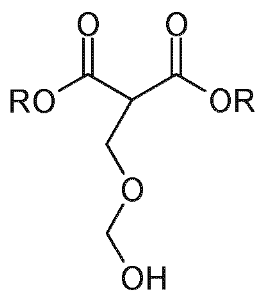

wobei jedes R unabhängig voneinander Methyl, Ethyl, n-Propyl, i-Propyl, n-Butyl, i-Butyl, tert-Butyl oder ein anderes Alkyl mit 4 bis 9 C-Atomen ist.

Weitere nicht-limitierende Beispiele eines Reaktionsproduktes von Formaldehyd mit einer C-H-aciden Eduktverbindung wie in Anspruch 1 definiert können auch sein:

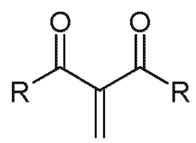
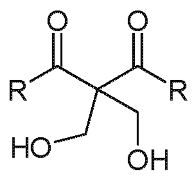
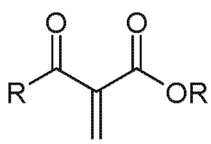
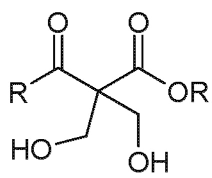

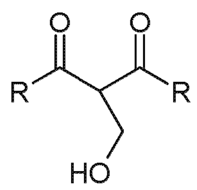
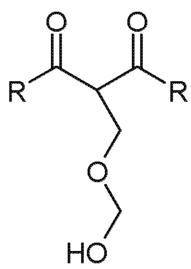
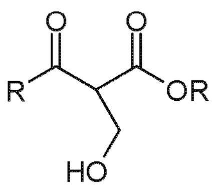
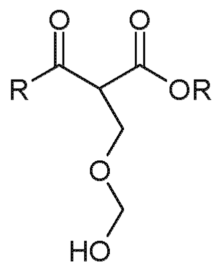

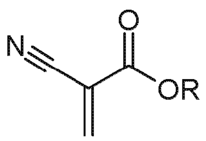
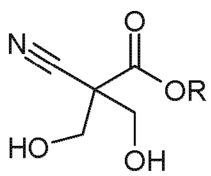
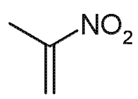
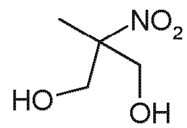

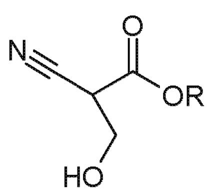
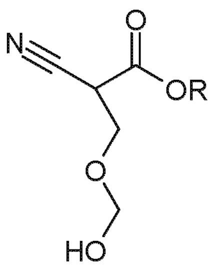
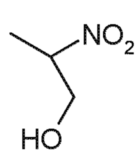
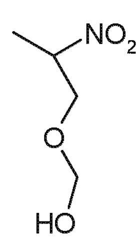

wobei R unabhängig voneinander Methyl, Ethyl, n-Propyl, i-Propyl, n-Butyl, i-Butyl, *tert*-Butyl oder ein anderes Alkyl mit 4 bis 9 C-Atomen ist.

Nachweisen kann man die Reaktionsprodukte mit bekannten analytischen Methoden wie z. B.: GC-MS, $^{1}H$-NMR oder $^{13}C$-NMR.

Eine erfindungsgemäße Phenolharzkomposition (wie vorstehend definiert, vorzugsweise wie vorstehend als bevorzugt definiert) umfasst vorzugsweise

- ein ortho-kondensiertes phenolisches Resol mit veretherten und/oder freien Methylolgruppen in einer Gesamtmenge

von 40 bis 60 Gew.-%,

- freies Formaldehyd in einer Menge von weniger als 0,1 Gew.-%, bevorzugt weniger als 0,08 Gew.-%, besonders bevorzugt weniger als 0,05 Gew.-%, jeweils bezogen auf die Gesamtmasse der Phenolharz-Komposition,

- ein oder mehrere Reaktionsprodukte von Formaldehyd mit einer oder mehreren C-H-aciden Eduktverbindungen wie in Anspruch 1 definiert,

- sonstige Bestandteile in einer Gesamtmenge von mindestens 38 Gew.-%,
  wobei die sonstigen Bestandteile umfassen

- ein Lösungsmittel ausgewählt aus der Gruppe bestehend aus Fettsäurealkylester, Alkylsilikate, Alkylsilikat-Oligomere und deren Gemische.

Erfindungsgemäße Phenolharzkompositionen, welche Lösungsmittel ausgewählt aus der Gruppe bestehend aus Fettsäurealkylester (vorzugsweise Methylester, bevorzugt Methylester des Rapsöls), Alkylsilikate, Alkylsilikat-Oligomere und ihren Gemische umfassen, haben besonders bevorzugte Eigenschaften (zum Beispiel eine einstellbare Viskosität) für die Prozessierbarkeit in industriellen Verfahren. Vorzugsweise umfassen solche erfindungsgemäßen Phenolharzkompositionen einen größeren Massenanteil an dem oder den besagten Lösungsmitteln als an aromatischen Lösungsmitteln.

Vorzugsweise umfasst eine erfindungsgemäße Phenolharzkomposition (wie vorstehend beschrieben, vorzugsweise wie vorstehend als bevorzugt bezeichnet) nur geringe Mengen an polaren Lösungsmitteln oder keine polaren Lösungsmittel; insbesondere bevorzugt beträgt die Gesamtmenge an Furfurylalkohol und Furfural weniger als 5 Gew.-%, bevorzugt weniger als 3 Gew.-%, bezogen auf die Gesamtmenge der erfindungsgemäßen Phenolharz-Komposition. Besonders bevorzugt umfasst eine erfindungsgemäße Phenolharzkomposition weder Furfurylalkohol noch Furfural.

Zudem umfasst eine erfindungsgemäße Phenolharzkomposition (wie vorstehend beschrieben, vorzugsweise wie vorstehend als bevorzugt bezeichnet) vorzugsweise nur geringe Mengen an aromatischen Lösungsmitteln oder keine aromatischen Lösungsmittel; insbesondere bevorzugt beträgt der Anteil an aromatischen Lösungsmitteln weniger als 25 Gew.-%, bevorzugt weniger als 20 Gew.-%, bezogen auf die Gesamtmenge der erfindungsgemäßen Phenolharz-Komposition.

Eine erfindungsgemäße Phenolharzkomposition umfasst vorzugsweise nicht mehr als eine Gesamtmenge von 0,25 Gew.-% Borat (und umfasst bevorzugt gar kein Borat), vorzugsweise keine anorganischen Salze in einer Gesamtmenge von mehr als 0,25 Gew.-%, jeweils bezogen auf die Gesamtmenge der Phenolharzkomposition. Eine erfindungsgemäße Phenolharzkomposition umfasst vorzugsweise nicht mehr als eine Gesamtmenge von 0,0025 Gew.-% Borax (und umfasst bevorzugt gar kein Borax).

In erfindungsgemäßen Phenolharzkompositionen (wie vorstehend definiert, vorzugsweise wie vorstehend als bevorzugt definiert) besitzt das ortho-kondensierte phenolische Resol vorzugsweise ein Verhältnis der Gesamtmenge von veretherten und/oder freien MethylolGruppen zu aromatischen Ringen im Bereich von 0,2 : 1 bis 2 : 1, vorzugsweise im Bereich von 0,3 : 1 bis 1,2 : 1, besonders bevorzugt im Bereich von 0,3 : 1 bis 0,7 : 1 besitzt. Die vorliegende Erfindung ist insbesondere relevant, wenn derartig konstituierte ortho-kondensierte phenolische Resole eingesetzt werden sollen; denn zu ihrer Herstelung wird mit einem besonders hohen Überschuß an Formaldehyd gearbeitet, so dass in der Produktmischung entsprechend hohe Restmengen an Formaldehyd verbleiben, die auf erfindungsgemäße Weise beseitigt werden können, ohne die Eignung der Mischung für die Verwendung im Cold-Box- oder No-Bake-Verfahren zu beeinträchtigen. Bei Herstellung derartig konstituierter ortho-kondensierter phenolischer Resole liegt das molare Verhältnis der Gesamtmengen an Phenol-Monomeren zu Formaldehyd vorzugsweise im Bereich von 1:1,3 bis 1:2. Bisher war die industrielle Herstellung und Verwendung solcher ortho-kondensierten phenolischen Resole dadurch erschwert, dass diese aufgrund des hohen Gehalts an freiem Formaldehyd einen unangenehmen Geruch besaßen und sogar gesundheitsschädlich waren.

Die vorliegende Erfindung betrifft auch ein Zweikomponenten-Bindemittelsystem zur Verwendung im Polyurethan-Cold-Box-Verfahren, bestehend aus

- einer Phenolharz-Komposition wie vorstehend definiert, vorzugsweise wie vorstehend als bevorzugt definiert, als Phenolharz-Komponente
  und

- einer Polyisocyanat-Komponente umfassend ein Polyisocyanat mit mindestens zwei Isocyanat-Gruppen pro Molekül.

Erfindungsgemäße Zweikomponenten-Bindemittelsysteme sind besonders arm an Formaldehyd; die vorstehend diskutierten Vorteile der erfindungsgemäßen PhenolharzKomposition und die nachstehend diskutierten Vorteile erfindungsgemäßer Verfahren und Verwendungen gelten entsprechend.

Die Erfindung betrifft auch die Verwendung einer C-H-aciden Verbindung wie in Anspruch 8 definiert als Formaldehyd-Fänger zur Herstellung einer Phenolharz-Komposition, insbesondere einer erfindungsgemäßen Phenolharz-Komposition, zur Verwendung im Polyurethan-Cold-Box-Verfahren. Hinsichtlich bevorzugter C-H-acider Verbindungen gelten die obigen Ausführungen aus der Diskussion erfindungsgemäßer Phenolharz-Kompositionen entsprechend.

Bevorzugt ist die erfindungsgemäße Verwendung (wie vorstehend definiert) einer C-H-aciden Verbindung wie in Anspruch 8 definiert zur Herstellung einer (vorzugsweise erfindungsgemäßen) Phenolharz-Komposition zur Verwendung im Polyurethan-Cold-Box- Verfahren, wobei die C-H-acide Verbindung verwendet wird als

(i) Formaldehyd-Fänger
und gleichzeitig als

(ii) Mittel zur Beschleunigung des Zerfalls des Polyurethan-Cold-Box-Harzes.

Die Erfindung betrifft auch ein Verfahren zur Herstellung einer (vorzugsweise erfindungsgemäßen) Phenolharz-Komposition mit folgenden Schritten:

- Herstellen oder Bereitstellen einer Grundmischung umfassend

  ein ortho-kondensiertes phenolisches Resol mit veretherten und/oder freien Methylolgruppen

  sowie

  freies Formaldehyd in einer Menge von mehr als 0,25 Gew.-%, bevorzugt von mehr als 0,35 Gew.-%, besonders bevorzugt von mehr als 0,45 Gew.-%, bezogen auf die Gesamtmasse der Grundmischung,

  wobei die Grundmischung nicht mehr als 2 Gew.-% Wasser enthält, vorzugsweise nicht mehr als 1 Gew.-%,

- Vermischen der Grundmischung mit einer oder mehreren C-H-aciden Verbindungen wie in Anspruch 10 definiert zu einer Reaktionsmischung und Reagieren lassen des freien Formaldehyds mit der bzw. den mehreren C-H-aciden Verbindungen unter Bildung eines bzw. mehrerer Reaktionsprodukte, wobei die C-H-aciden Verbindungen insgesamt im molaren Überschuss vorliegen bezogen auf die Gesamtmenge an freiem Formaldehyd in der Mischung, wobei die Reaktionsmischung nicht mehr als 2 Gew.-% Wasser enthält, vorzugsweise nicht mehr als 1 Gew.-%, und anschließend
- Zugeben sonstiger Bestandteile, sodass die Phenolharz-Komposition resultiert, vorzugsweise eine erfindungsgemäße Phenolharz-Komposition wie vorstehend beschrieben (vorzugsweise wie vorstehend als bevorzugt bezeichnet).

Die vorstehenden Ausführungen zur erfindungsgemäßen Phenolharz-Komposition, zu erfindungsgemäßen Zweikomponenten-Bindemittelsystemen und Verwendungen gelten entsprechend für das erfindungsgemäße Verfahren. Dies gilt insbesondere für bevorzugte C-H-acide Verbindungen, bevorzugte sonstige Bestandteile der Phenolharzkomposition und bevorzugte Ausgestaltungen des darin enthaltenen ortho-kondensierten phenolischen Resols.

Der Fachmann wird bei Durchführung des erfindungsgemäßen Verfahrens berücksichtigen, dass zur Reaktion des freien Formaldehyds den Umständen des Einzelfalls angepasste geeignete Reaktionsparameter eingestellt werden sollten; insbesondere wird der Fachmann geeignete Reaktionstemperaturen anhand einfacher Vorversuche unter Berücksichtigung der unten angegebenen Beispiele ermitteln.

Überraschenderweise hat sich gezeigt, dass durch Vermischen der Grundmischung (enthaltend die oben angegebene hohe Menge an freiem Formaldehyd) mit einer oder mehreren C-H-aciden Verbindungen wie in Anspruch 10 definiert zu einer Reaktionsmischung und Reagieren lassen des freien Formaldehyds mit der bzw. den mehreren C-H-aciden Verbindungen wie in Anspruch 10 definiert die Menge an freiem Formaldehyd auf unter 0,1 Gew.-% (und sogar auf unter 0,08 Gew.-% und unter 0,05 Gew.-%) reduziert werden kann. Die oben beschriebenen Probleme, die durch einen hohen Gehalt an Formaldehyd verursacht werden, können somit vermieden werden.

Grund- und Reaktionsmischungen wie vorstehend definiert, welche nicht mehr als 2 Gew.%, vorzugsweise nicht mehr als 1 Gew.% Wasser, enthalten, bezogen auf die Gesamtmasse der Grund- bzw. Reaktionsmischung, sind erfindungsgemäß vorgesehen, da Wasser mit einer korrespondierenden Polyisocyanat-Komponente eines Zweikomponenten-Bindemittelsystems reagieren und somit den Vernetzungsgrad der beiden Komponenten verschlechtern kann.

Entsprechend werden im erfindungsgemäßen Verfahren zwar sonstige Bestandteile zu der Reaktionsmischung zugegeben, sodass die Phenolharz-Komposition resultiert, aber Wasser gehört vorzugsweise nicht oder nur in äußerst geringer Menge zu diesen sonstigen Bestandteilen. Zu bevorzugten sonstigen Bestandteilen sowie zu weiteren weniger bevorzugten Bestandteilen sei auf die diesbezüglichen obigen Ausführungen zu erfindungsgemäßen Phenolharz-Kompositionen verwiesen, die hier entsprechend gelten.

Insbesondere ist ein erfindungsgemäßes Verfahren (wie vorstehend definiert) bevorzugt, wobei die Herstellung der Grundmischung den folgenden Schritt umfasst:

- Umsetzen ein oder mehrerer Phenol-Monomeren mit Formaldehyd,

wobei das molare Verhältnis der Gesamtmengen an Formaldehyd zu Phenol-Monomeren im Bereich von 1,3:1 bis 2:1 liegt.

Grundmischungen, welche in dieser Weise hergestellt wurden, weisen eine besonders große Menge an freiem Formaldehyd auf. Die Verringerung der Menge an freiem Formaldehyd ist daher besonders wichtig. Dies wird erreicht durch das Vermischen der entsprechenden Grundmischung mit ein oder mehreren C-H-aciden Verbindungen wie in Anspruch 10 definiert zu einer Reaktionsmischung und Reagieren lassen des freien Formaldehyds mit der beziehungsweise den mehreren C-H-aciden Verbindungen unter Bildung eines bzw. mehrerer Reaktionsprodukte(s), wobei die C-H-acide Verbindung insgesamt im molaren Überschuss vorliegen bezogen auf die Gesamtmenge an freiem Formaldehyd in der Mischung.

Besonders bevorzugt ist ein erfindungsgemäßes Verfahren (wie vorstehend definiert, vorzugsweise wie vorstehend als bevorzugt definiert), wobei der pKa der einen oder der mehreren C-H-aciden wie in Anspruch 10 definiert Verbindungen im Bereich von 5 bis 14 liegt, bezogen auf den aciden, an Kohlenstoff gebundenen Wasserstoff. Die obigen Ausführungen zu bevorzugten pKa-Werten der C-H-aciden Verbindungen gelten hier entsprechend.

Insbesondere ist ein erfindungsgemäßes Verfahren (wie vorstehend definiert, vorzugsweise wie vorstehend als bevorzugt definiert) bevorzugt, wobei die Reaktion des freien Formaldehyds mit der bzw. den mehreren C-H-aciden Verbindungen wie in Anspruch 10 definiert unter Bildung eines bzw. mehrerer Reaktionsprodukte bei einer Temperatur im Bereich von 80 bis 126 °C erfolgt, vorzugweise bei einer Temperatur im Bereich von 80 bis 100 °C.

Bei Temperaturen über 126 °C entstehen regelmäßig irreversible Schäden an dem angestrebten ortho-kondensierten phenolischen Resol; im Einzelfall entstehen Schäden bereits bei Temperaturen von größer als 100 °C. Bei Temperaturen unter 80 °C dauert die Reaktion des freien Formaldehyds mit der beziehungsweise den mehreren C-H-aciden Verbindungen (wie in Anspruch 10 definiert) für praktische Zwecke regelmäßig zu lange. Dies gilt insbesondere bei Einsatz der bevorzugten C-H-aciden Verbindungen.

Bevorzugt ist ein erfindungsgemäßes Verfahren (wie vorstehend definiert, vorzugsweise wie vorstehend als bevorzugt definiert), wobei das molare Verhältnis der Gesamtmenge an C-H-aciden Verbindungen wie in Anspruch 10 definiert zur Gesamtmenge an Formaldehyd in der Reaktionsmischung größer ist als 2:1, vorzugsweise größer als 3:1.

Solche erfindungsgemäßen Verfahren, in denen ein beträchtlicher Überschuss an C-H-aciden Verbindungen wie in Anspruch 10 definiert im Verhältnis zur Gesamtmenge an Formaldehyd in der Reaktionsmischung eingesetzt wird, führen zu einer besonders effektiven Verringerung des Gehalts an freiem Formaldehyd.

Besonders bevorzugt ist ein erfindungsgemäßes Verfahren (wie vorstehend definiert, vorzugsweise wie vorstehend als bevorzugt definiert), wobei die Reaktion des freien Formaldehyds mit der beziehungsweise den mehreren C-H aciden Verbindungen wie in Anspruch 10 definiert unter Bildung eines bzw. mehrerer Reaktionsprodukte zumindest solange durchgeführt wird, bis

50 Mol-% des in der Grundmischung vorhandenen freien Formaldehyds umgesetzt sind, vorzugsweise bis 70 Mol-% des in der Grundmischung vorhandenen freien Formaldehyds umgesetzt sind
und/oder

in der Reaktionsmischung der Anteil an freiem Formaldehyd kleiner ist als 0,2 Gewichts-%, bezogen auf die Gesamtmasse der Reaktionsmischung.

Reaktionsmischungen mit einem Anteil an freiem Formaldehyd, welcher kleiner ist als 0,2 Gew.%, bezogen auf die Gesamtmasse der Reaktionsmischung, lassen sich schon durch Zugabe einer gleichen Masse an sonstiger Bestandteilen in eine (vorzugsweise erfindungsgemäße) Phenolharz-Komposition überführen, die einen Anteil an freiem Formaldehyd von kleiner als 0,1 Gew.% aufweist, bezogen auf die Gesamtmasse der Phenolharz-Komposition.

Die Erfindung betrifft auch ein Verfahren zur Herstellung eines (vorzugsweise erfindungsgemäßen) Zweikomponenten-Bindemittelsystems, welches die folgenden Schritte umfasst:

- Bereitstellen oder Herstellen einer Phenolharz-Komposition wie oben beschrieben (vorzugsweise einer erfindungsgemäßen oder nach einem erfindungsgemäßen Verfahren hergestellten Phenolharz-Komposition) und Kombinieren der bereitgestellten oder hergestellten Phenolharz-Komponente mit

- einer Polyisocyanat-Komponente umfassend ein Polyisocanat mit mindestens zwei Isocyanat-Gruppen pro Molekül,

so dass das (vorzugsweise erfindungsgemäße) Zweikomponenten-Bindemittelsystem resultiert.

Die Erfindung betrifft auch ein Verfahren zur Herstellung eines Speisers, einer Gießereiform oder eines Gießereikerns aus einer Formstoffmischung, wobei die Formstoffmischung mittels eines erfindungsgemäßen Zweikomponenten-Bindemittelsystems (wie vorstehend beschrieben, vorzugsweise wie vorstehend als bevorzugt bezeichnet) gebunden wird, vorzugsweise im Cold-Box-Verfahren unter Verwendung der dazu üblichen Katalysatoren und Apparaturen.

Die Erfindung betrifft auch Speiser, Gießereiformen und Gießereikerne, die nach einem solchen erfindungsgemäßen Verfahren (wie vorstehend beschrieben, vorzugsweise wie vorstehend als bevorzugt bezeichnet) herstellbar sind. Solche Speiser, Gießereiformen und Gießereikerne werden hergestellt unter Verwendung einer erfindungsgemäßen Phenolharz-Komposition (wie vorstehend beschrieben, vorzugsweise wie vorstehend als bevorzugt bezeichnet) als Bestandteil eines erfindungsgemäßen Zweikomponenten-Bindemittelsystems (wie vorstehend beschrieben, vorzugsweise wie vorstehend als bevorzugt bezeichnet).

Nachfolgend wird die Erfindung anhand von erfindungsgemäßen Beispielen und nicht erfindungsgemäßen Vergleichsbeispielen näher erläutert:

<u>Bezeichnungen:</u>

DBE = DBE-2 (Handelsprodukt der Firma Rhodia)

Solvesso = Solvesso 100 (Handelsprodukt der Firma Exxon, umfassend diverse aromatische Kohlenwasserstoffe)

RME = Rapsölmethylester (Biodiesel; Handelsprodukt "Vegetable oil based Methyl Ester" der Firma Cargill)

Silan 187 = Silquest A-187 (Handelsprodukt der Firma Crompton SA, gamma-Glycidoxypropyltrimethoxysilan)

Flusssäure 40% = Flusssäure (40 - 45 Gew.-% HF in wässriger Lösung; Handelsprodukt der Firma Honeywell)

MDI = Lupranat® M 20 S (Handelsprodukt der Firma BASF umfassend polymeres MDI und Anteile an momerem MDI)

Vergleichsbeispiel 1 - <u>nicht erfindungsgemäß: Herstellung einer Phenolharz-Komposition ohne Einsatz einer C-H-aciden Verbindung</u>

Schritt 1:

Eine Vormischung wurde durch Mischen von 45,96 kg Phenol, 38,14 kg einer wässrigen Formaldehyd-Lösung (50 Gew.-% Formaldehyd bezogen auf die Gesamtmasse der wässrigen Formaldehyd-Lösung) und 0,07 kg Zinkacetatdihydrat in einem Reaktionsgefäß hergestellt. Der pH-Wert lag bei 5, gemessen bei 20 °C.

Schritt 2:

Die hergestellte Vormischung wurde auf Rückflusstemperatur erhitzt und unter Rückfluss gehalten. Währenddessen wurden fortlaufend Proben entnommen und die Brechungsindices der jeweiligen entnommenen Probenmischungen bei 20 °C bestimmt, bis ein Brechungsindex von 1,490 erreicht wurde. Das Produkt war eine Vormischung mit einem Brechungsindex von 1,490.

Diese Vormischung mit einem Brechungsindex von 1,490 wurde unter Atmosphärendruck bis zum Erreichen von 125 °C (im Rückstand) destilliert. Das Produkt war eine unter Atmosphärendruck destillierte Vormischung.

Die Destillation wurde anschließend unter Vakuum fortgesetzt. Hierzu wurden die Destillationsbedingungen so gewählt, dass ein Vakuum im Reaktionsgefäß von 60 mbar vorlag. Die Vakuumdestillation wurde bei einer Temperatur durchgeführt, die 126 °C (im Rückstand gemessen) nicht überschritt und 100 °C (im Rückstand gemessen) nicht unterschritt.

Während der Destillation unter Vakuum wurden fortlaufend Proben entnommen und die Brechungsindices der jeweiligen entnommenen Probenmischungen bei 20 °C bestimmt, bis ein Brechungsindex von 1,610 erreicht wurde.

Nach Erreichen eines Brechungsindexes von 1,610 wurde die Destillation beendet; das Produkt war eine unter Vakuum behandelte Vormischung mit einem Brechungsindex von 1,610.

Schritt 3:

Die unter Vakuum behandelte Vormischung mit einem Brechungsindex von 1,610 wurde auf mindestens 40 °C abgekühlt. Das resultierende Produkt wird als Grundmischung bezeichnet und ist für die Weiterverarbeitung vorgesehen.

Der pH-Wert (nach Methode 1 eingeschätzt) der Grundmischung und der Gehalt an freiem Formaldehyd (nach Methode 2 gemessen) der Grundmischung wurden bei 20 °C bestimmt. Der nach Methode 1 eingeschätzte pH-Wert war 5,0 und der nach Methode 2 gemessene Gehalt an freiem Formaldehyd war 0,35 Gew.-% bezogen auf die Gesamtmasse der Grundmischung.

Die Menge an resultierender Grundmischung betrug 60,4 Gew.-% bezogen auf die Gesamtmasse der in Schritt 1 hergestellten Vormischung.

Die Grundmischung hatte einen Gehalt an Wasser von 0,4 Gew.-%.

Schritt 4:

Zu der Grundmischung wurden gemäß Tabelle "Vergleichsbeispiel 1" Lösungsmittel und Additive zugegeben und das Produkt so fertig konfektioniert. Es resultierte ein fertig konfektioniertes Produkt mit einer Zusammensetzung gemäß Tabelle "Vergleichsbeispiel 1".

Tabelle "Vergleichsbeispiel 1" :

| Komposition "Vergleichsbeispiel 1": | Masse [kg] |
|---|---|
| Grundmischung | 50,85 |
| DBE | 18,10 |
| Solvesso | 19,10 |
| RME | 11,50 |
| Silan 187 | 0,30 |
| Flusssäure 40% | 0,15 |

Das fertig konfektionierte Produkt hatte einen Gehalt an freiem Formaldehyd (nach Methode 2 gemessen) von 0,18 Gew.-%, bezogen auf die Gesamtmasse des fertigen konfektionierten Produkts.

Beispiel 1 - erfindungsgemäß: Herstellung einer Phenolharz-Komposition mit Einsatz einer C-H-aciden Verbindung wie in Anspruch 10 definiert

Schritte 1 bis 3: Herstellen einer Grundmischung

Schritt 1:

Eine Vormischung wurde durch Mischen von 45,96 kg Phenol, 38,14 kg einer wässrigen Formaldehyd-Lösung (50 Gew.-% Formaldehyd bezogen auf die Gesamtmasse der wässrigen Formaldehyd-Lösung) und 0,07 kg Zinkacetatdihydrat in einem Reaktionsgefäß hergestellt. Der pH-Wert lag bei 5, gemessen bei 20 °C.

Schritt 2:

Die hergestellte Vormischung wurde auf Rückflusstemperatur erhitzt und unter Rückfluss gehalten. Währenddessen wurden fortlaufend Proben entnommen und die Brechungsindices der jeweiligen entnommenen Probenmischungen bei 20 °C bestimmt, bis ein Brechungsindex von 1,490 erreicht wurde.

Nach Erreichen eines Brechungsindexes von 1,490 wurde die Vormischung unter Atmosphärendruck bis zum Erreichen von 125 °C (im Rückstand) destilliert. Das Produkt war eine unter Atmosphärendruck destillierte Vormischung.

Die Destillation wurde anschließend unter Vakuum fortgesetzt. Hierzu wurden die Destillationsbedingungen so gewählt, dass ein Vakuum im Reaktionsgefäß von 60 mbar vorlag. Die Vakuumdestillation wurde bei einer Temperatur

durchgeführt, die 126 °C (im Rückstand gemessen) nicht überschritt und 100 °C nicht unterschritt.

Während der Destillation unter Vakuum wurden fortlaufend Proben entnommen und die Brechungsindices der jeweiligen entnommenen Probenmischungen bei 20 °C bestimmt, bis ein Brechungsindex von 1,610 erreicht wurde.

Nach Erreichen des Brechungsindexes von 1,610 wurde die Vakuumdestillation beendet. Das Produkt war eine unter Vakuum behandelte Vormischung mit einem Brechungsindex von 1,610.

Schritt 3:

Die unter Vakuum behandelte Vormischung mit einem Brechungsindex von 1,610 wurde unter Atmosphärendruck auf 100 °C abgekühlt. Das resultierende Produkt wird als Grundmischung bezeichnet und ist für die Weiterverarbeitung vorgesehen.

Der pH-Wert (nach Methode 1 eingeschätzt) der Grundmischung und der Gehalt an freiem Formaldehyd (nach Methode 2 gemessen) der Grundmischung wurden bei 20 °C bestimmt. Der nach Methode 1 eingeschätzte pH-Wert war 5,0 und der nach Methode 2 gemessene Gehalt an freiem Formaldehyd war 0,35 Gew.-% bezogen auf die Gesamtmasse der Grundmischung.

Die Grundmischung hatte einen Gehalt an Wasser von 0,4 Gew.-%.

Schritt 4 - Reagieren lassen von freiem Formaldehyd mit einer C-H-aciden Verbindung wie in Anspruch 10 definiert unter Bildung von Reaktionsprodukten:

Die Grundmischung wurde bei 100 °C mit 3 kg Diethylmalonat (als Beispiel für eine C-H-acide Verbindung wie in Anspruch 1, 8 und 10 definiert) zu einer Reaktionsmischung vermischt und die Reaktionsmischung für 10 Minuten bei 100 °C gehalten, sodass eine Reaktion zwischen dem freien Formaldehyd aus der Grundmischung und dem Diethylmalonat stattfand. Die Reaktionsmischung wurde anschließend erst während 30 Minuten auf 80 °C und dann auf mindestens 40 °C abgekühlt. Das Produkt war eine abgekühlte Reaktionsmischung.

Der Gehalt der abgekühlten Reaktionsmischung an freiem Formaldehyd (nach Methode 2 gemessen) wurde bei 20 °C bestimmt. Der nach Methode 2 gemessene Gehalt an freiem Formaldehyd war 0,15 Gew.-%, bezogen auf die Gesamtmasse der abgekühlten Reaktionsmischung.

Die Menge an abgekühlter Reaktionsmischung betrug 61,8 Gew.-% bezogen auf die Gesamtmasse der in Schritt 1 hergestellten Vormischung.

Schritt 5 - Zugeben sonstiger Bestandteile zur Fertigstellung einer erfindungsgemäßen Phenolharzkomposition:

Zu der abgekühlten Reaktionsmischung wurden gemäß Tabelle "Beispiel 1" Lösungsmittel und Additive entsprechend zugegeben und das Produkt so fertig konfektioniert. Es resultierte ein fertig konfektionierte Produkt mit einer Zusammensetzung gemäß Tabelle "Beispiel 1".

Tabelle "Beispiel 1":

| Komposition "Beispiel 1": | Masse [kg] |
|---|---|
| Reaktionsmischung | 53,85 |
| DBE | 15,10 |
| Solvesso | 19,10 |
| RME | 11,50 |
| Silan 187 | 0,30 |
| Flusssäure 40% | 0,15 |

Das fertig konfektionierte Produkt hat einen Gehalt an freiem Formaldehyd (nach Methode 2 gemessen) von 0,08 Gew.-% bezogen auf die Gesamtmasse des fertigen konfektionierten Produkts und ist eine erfindungsgemäße Phenolharz-Komposition.

Vergleichsbeispiel 2 - nicht erfindungsgemäß: Herstellung einer Phenolharz-Komposition ohne Einsatz einer C-H-aciden Verbindung

Schritt 1:

Eine Vormischung wurde durch Mischen von 46,7 kg Phenol, 21,4 kg kommerziell erhältliches Paraformaldehyd (91 Gew.-% Formaldehyd bezogen auf die Gesamtmasse des kommerziell erhältlichen Paraformaldehyds), 0,06 kg Zinkacetatdihydrat und 1,4 kg Methanol in einem Reaktionsgefäß hergestellt. Der pH-Wert (nach Methode 1 eingeschätzt) lag bei 5, gemessen bei 20 °C.

Schritt 2:

Die hergestellte Vormischung wurde auf 110 °C erhitzt und 45 Minuten bei 110 °C gehalten.
Nach den 45 Minuten bei 110 °C wurde die erhitzte Vormischung unter Atmosphärendruck bis zum Erreichen von 125 °C (im Rückstand) destilliert. Das Produkt war eine unter Atmosphärendruck destillierte Vormischung.
Die Destillation wurde anschließend unter Vakuum fortgesetzt. Hierzu wurden die Destillationsbedingungen so gewählt, dass ein Vakuum im Reaktionsgefäß von 60 mbar vorlag. Anschließend wurde die Destillation bei einer Temperatur fortgesetzt, die 126 °C (im Rückstand) nicht überschritt.
Während der Destillation unter Vakuum wurden fortlaufend Proben entnommen und die Brechungsindices der jeweiligen entnommenen Probenmischungen bei 20 °C bestimmt, bis ein Brechungsindex von 1,613 erreicht wurde.
Nach Erreichen eines Brechungsindexes von 1,613 wurde die Destillation beendet; das Produkt war eine unter Vakuum behandelte Vormischung mit einem Brechungsindex von 1,613.

Schritt 3:

Die unter Vakuum behandelte Vormischung mit einem Brechungsindex von 1,613 wurde auf mindestens 40 °C abgekühlt. Das resultierende Produkt wird als Grundmischung bezeichnet und ist für die Weiterverarbeitung vorgesehen.
Der pH-Wert (nach Methode 1 eingeschätzt) der Grundmischung und der Gehalt an freiem Formaldehyd (nach Methode 2 gemessen) der Grundmischung wurden bei 20 °C bestimmt. Der nach Methode 1 eingeschätzte pH-Wert war 5,1 und der nach Methode 2 gemessene Gehalt an freiem Formaldehyd war 0,4 Gew.-% bezogen auf die Gesamtmasse der Grundmischung.
Die Grundmischung hatte einen Gehalt an Wasser von 0,4 Gew.-%.
Die Menge an Grundmischung betrug 78,4 Gew.-% bezogen auf die Gesamtmasse der in Schritt 1 hergestellten Vormischung.

Schritt 4:

Zu der Grundmischung wurden gemäß Tabelle "Vergleichsbeispiel 2" Lösungsmittel und Additive zugegeben und das Produkt so fertig konfektioniert. Es resultierte ein fertig konfektionierte Produkt mit einer Zusammensetzung gemäß Tabelle "Vergleichsbeispiel 2".

Tabelle "Vergleichsbeispiel 2":

| Komposition "Vergleichsbeispiel 2": | Masse [kg] |
|---|---|
| Grundmischung | 54,50 |
| DBE | 20,00 |
| RME | 20,00 |
| Solvesso | 5,10 |
| Silan 187 | 0,30 |
| Flusssäure 40% | 0,10 |

Das fertig konfektionierte Produkt hatte einen Gehalt an freiem Formaldehyd (nach Methode 2 gemessen) von 0,22 Gew.-%, bezogen auf die Gesamtmasse des fertigen konfektionierten Produkts.

Beispiel 2 - erfindungsgemäß: Herstellung einer Phenolharz-Komposition mit Einsatz einer C-H-aciden Verbindung wie in Anspruch 10 definiert

Schritte 1 bis 3: Herstellen einer Grundmischung

Schritt 1:

Eine Vormischung wurde durch Mischen von 46,7 kg Phenol, 21,4 kg kommerziell erhältliches Paraformaldehyd (91 Gew.-% Paraformaldehyd bezogen auf die Gesamtmasse des kommerziell erhältlichen Paraformaldehyds), 0,06 kg Zinkacetatdihydrat und 1,4 kg Methanol in einem Reaktionsgefäß hergestellt. Der pH-Wert (nach Methode 1 eingeschätzt) lag bei 5, gemessen bei 20 °C.

Schritt 2:

Die hergestellte Vormischung wurde auf 110 °C erhitzt und 45 Minuten bei 110 °C gehalten.

Nach den 45 Minuten bei 110 °C wurde die erhitzte Vormischung unter Atmosphärendruck bis zum Erreichen von 125 °C (im Rückstand) destilliert. Das Produkt war eine unter Atmosphärendruck destillierte Vormischung.

Die Destillation wurde anschließend unter Vakuum fortgesetzt. Hierzu wurden die Destillationsbedingungen so gewählt, dass ein Vakuum im Reaktionsgefäß von 60 mbar vorlag. Anschließend wurde die Destillation bei einer Temperatur fortgesetzt, die 126 °C (im Rückstand gemessen) nicht überschritt.

Während der Destillation unter Vakuum wurden fortlaufend Proben entnommen und die Brechungsindices der jeweiligen entnommenen Probenmischungen bei 20 °C bestimmt, bis ein Brechungsindex von 1,613 erreicht wurde.

Nach Erreichen eines Brechungsindexes von 1,613 wurde die Destillation beendet; das Produkt war eine unter Vakuum behandelte Vormischung mit einem Brechungsindex von 1,613.

Schritt 3:

Die unter Vakuum behandelte Vormischung mit einem Brechungsindex von 1,613 wurde auf mindestens 100 °C abgekühlt. Das resultierende Produkt wird als Grundmischung bezeichnet und ist für die Weiterverarbeitung vorgesehen.

Der pH-Wert (nach Methode 1 eingeschätzt) der Grundmischung und der Gehalt an freiem Formaldehyd (nach Methode 2 gemessen) der Grundmischung wurden bei 20 °C bestimmt. Der nach Methode 1 eingeschätzte pH-Wert war 5,1 und der nach Methode 2 gemessene Gehalt an freiem Formaldehyd war 0,4 Gew.-% bezogen auf die Gesamtmasse der Grundmischung.

Die Grundmischung hatte einen Gehalt an Wasser von 0,4 Gew.-%.

Schritt 4 - Reagieren lassen von freiem Formaldehyd mit einer C-H-aciden Verbindung wie in Anspruch 10 definiert unter Bildung von Reaktionsprodukten:

Die Grundmischung wurde bei 100 °C mit 3 kg Diethylmalonat (als Beispiel für eine C-H-aciden Verbindung wie in Anspruch 1; 8 und 10 definiert) zu einer Reaktionsmischung vermischt und die Reaktionsmischung für 10 Minuten bei 100 °C gehalten, sodass eine Reaktion zwischen dem freien Formaldehyd aus der Grundmischung und dem Diethylmalonat stattfand. Die Reaktionsmischung wurde anschließend erst während 30 Minuten auf 80 °C und dann auf 40 °C abgekühlt. Das Produkt war eine abgekühlte Reaktionsmischung.

Der Gehalt der abgekühlten Reaktionsmischung an freiem Formaldehyd (nach Methode 2 gemessen) wurde bei 20 °C bestimmt. Der nach Methode 2 gemessene Gehalt an freiem Formaldehyd war 0,15 Gew.-%, bezogen auf die Gesamtmasse der abgekühlten Reaktionsmischung.

Die Menge an abgekühlter Reaktionsmischung betrug 79,2 Gew.-% bezogen auf die Gesamtmasse der hergestellten Vormischung.

Schritt 5 - Zugeben sonstiger Bestandteile zur Fertigstellung einer erfindungsgemäßen Phenolharzkomposition:

Zu der abgekühlten Reaktionsmischung wurden gemäß Tabelle "Beispiel 2" Lösungsmittel und Additive entsprechend zugegeben und das Produkt so fertig konfektioniert. Es resultierte ein fertig konfektionierte Produkt mit einer Zusammensetzung gemäß Tabelle "Beispiel 2".

Tabelle "Beispiel 2":

| Komposition "Beispiel 2" | Masse [kg] |
|---|---|
| Reaktionsmischung | 57,50 |
| DBE | 17,00 |
| RME | 20,00 |
| Solvesso | 5,10 |
| Silan 187 | 0,30 |
| Flusssäure 40% | 0,10 |

Das fertig konfektionierte Produkt hatte einen Gehalt an freiem Formaldehyd (nach Methode 2 gemessen) von 0,07 Gew.-%, bezogen auf die Gesamtmasse des fertigen konfektionierten Produkts, und ist eine erfindungsgemäße Phenolharz-Komposition.

Beispiel 3 - erfindungsgemäß: Herstellung einer Phenolharz-Komposition mit Einsatz einer C-H-aciden Verbindung wie in Anspruch 10 definiert (unterschiedliche sonstige Bestandteile in Beispielen 3a und 3b)

Schritte 1 bis 3: Herstellen einer Grundmischung

Schritt 1:

Eine Vormischung wurde durch Mischen von 42,0 kg Phenol, 20,0 kg kommerziell erhältliches Paraformaldehyd (91 Gew.-% Paraformaldehyd bezogen auf die Gesamtmasse des kommerziell erhältlichen Paraformaldehyds) und 0,1 kg Zinkacetatdihydrat in einem Reaktionsgefäß hergestellt. Der pH-Wert (nach Methode 1 eingeschätzt) lag bei 5,0, gemessen bei 20 °C.

Schritt 2:

Die hergestellte Vormischung wurde auf 110 °C erhitzt und 60 Minuten bei 110 °C gehalten und von 110 °C auf 120 °C erhitzt und 60 Minuten bei 120 °C gehalten. Das Produkt war eine für 60 Minuten bei 120 °C gehaltene Vormischung.

Die für 60 Minuten bei 120 °C gehaltene Vormischung wurde unter Atmosphärendruck weiter erhitzt und bis zum Erreichen von einer Temperatur von 125 °C (im Rückstand) destilliert. Das Produkt war eine unter Atmosphärendruck destillierte Vormischung.

Die Destillation wurde anschließend unter Vakuum fortgesetzt. Hierzu wurden die Destillationsbedingungen so gewählt, dass ein Vakuum im Reaktionsgefäß von 60 mbar vorlag. Anschließend wurde die Destillation bei einer Temperatur fortgesetzt, die 126 °C (im Rückstand gemessen) nicht überschritt.

Während der Destillation unter Vakuum wurden fortlaufend Proben entnommen und die Brechungsindices der jeweiligen entnommenen Probenmischungen bei 20 °C bestimmt, bis ein Brechungsindex von $n_D^{20}$ =1,610 erreicht wurde.

Nach Erreichen eines Brechungsindexes von 1,610 wurde die Destillation beendet; das Produkt war eine unter Vakuum behandelte Vormischung mit einem Brechungsindex von 1,610.

Schritt 3:

Die unter Vakuum behandelte Vormischung mit einem Brechungsindex von 1,610 wurde unter Atmosphärendruck auf 100°C abgekühlt. Das resultierende Produkt wird als Grundmischung bezeichnet und ist für die Weiterverarbeitung vorgesehen.

Der pH-Wert (nach Methode 1 eingeschätzt) der Grundmischung und der Gehalt an freiem Formaldehyd (nach Methode 2 gemessen) der Grundmischung wurden bei 20 °C bestimmt. Der nach Methode 1 eingeschätzte pH-Wert war 5,1 und der nach Methode 2 gemessene Gehalt an freiem Formaldehyd war 0,45 Gew.-% bezogen auf die Gesamtmasse der Grundmischung.

Die Grundmischung hatte einen Gehalt an Wasser von 0,4 Gew.-%.

Schritt 4 - Reagieren lassen von freiem Formaldehyd mit einer C-H-aciden Verbindung wie in Anspruch 10 definiert unter Bildung von Reaktionsprodukten:

Die Grundmischung wurde bei 100 °C mit 3 kg Dimethylmalonat (Beispiel 3a) bzw. 3 kg Diethylmalonat (Beispiel 3b) (jeweils als Beispiel für eine C-H-aciden Verbindung wie in Anspruch 1, 8 und 10 definiert) zu einer Reaktionsmischung vermischt und die Reaktionsmischung für 10 Minuten bei 100 °C gehalten, sodass eine Reaktion zwischen dem freien Formaldehyd aus der Grundmischung und dem Dimethylmalonat (Beispiel 3a) bzw. Diethylmalonat (Beispiel 3b) stattfand. Die Reaktionsmischung wurde anschließend erst während 30 Minuten auf 80 °C und dann auf mindestens 40 °C abgekühlt. Es resultierte eine abgekühlte Reaktionsmischung.

Der Gehalt der abgekühlten Reaktionsmischung an freiem Formaldehyd (nach Methode 2 gemessen) wurde bei 20 °C bestimmt. Der nach Methode 2 gemessene Gehalt an freiem Formaldehyd war 0,07 Gew.-% (Beispiel 3a) bzw. 0,08 Gew.-% (Beispiel 3b), bezogen auf die Gesamtmasse der abgekühlten Reaktionsmischung.

Die Menge an abgekühlter Reaktionsmischung betrug jeweils 86 Gew.-% bezogen auf die Gesamtmasse der in Schritt 1 hergestellten Vormischung.

Schritt 5 - Zugeben sonstiger Bestandteile zur Fertigstellung einer erfindungsgemäßen Phenolharzkomposition (Beispiel 3a bzw. Beispiel 3b):

Zu der abgekühlten Reaktionsmischung wurden gemäß den Tabellen "Beispiel 3a", bzw. "Beispiel 3b" Lösungsmittel und Additive entsprechend zugegeben und das Produkt so fertig konfektioniert. Es resultierte jeweils ein fertig konfektionierte Produkt mit einer Zusammensetzung gemäß Tabelle "Beispiel 3a" bzw. "Beispiel 3b".

Tabelle "Beispiel 3a":

| Komposition "Beispiel 3a" | Masse [kg] |
|---|---|
| Reaktionsmischung | 54,00 |
| DBE | 15,10 |
| Solvesso | 19,10 |
| RME | 11,50 |
| Silan 187 | 0,30 |

Tabelle "Beispiel 3b":

| Komposition "Beispiel 3b": | Masse [kg] |
|---|---|
| Reaktionsmischung | 53,85 |
| DBE | 14,10 |
| Tetraethyl-orthosilikat (TEOS) | 32,05 |

Die fertig konfektionierten Produkte gemäß "Beispiel 3a" und "Beispiel 3b" hatten jeweils einen Gehalt an freiem Formaldehyd von weniger als 0,05 Gew.-%, bestimmt gemäß Methode 2; es handelt sich jeweils um eine erfindungsgemäße Phenolharz-Komposition.

Beispiel 4: Herstellung erfindungsgemäßer Zweikomponenten-Bindemittelsysteme

4.1 Kompositionen "Beispiel 1", "Beispiel 2", "Beispiel 3a" und "Beispiel 3b" wie oben beschrieben wurden jeweils mit MDI Mischungen 1 (Tabelle 5), 2 (Tabelle 6) und 3 (Tabelle 7) kombiniert, um erfindungsgemäße Zweikomponenten-Bindemittelsysteme zur Verwendung im Polyurethan-Cold-Box-Verfahren herzustellen.

Insgesamt ergaben sich zwölf Zweikomponenten-Bindemittelsysteme aus den Kombinationen der Kompositionen nach "Beispiel 1", "Beispiel 2", "Beispiel 3a" und "Beispiel 3b" mit den nachfolgend definierten MDI Mischungen 1 (vgl. Tabelle 5), 2 (vgl. Tabelle 6) und 3 (vgl. Tabelle 7).

4.2 Kompositionen "Beispiel 3a" und "Beispiel 3b" wie oben beschrieben wurden jeweils mit MDI Mischungen 4 (Tabelle 8) und 5 (Tabelle 9) kombiniert, um erfindungsgemäße Zweikomponenten-Bindemittelsysteme zur Verwendung im Polyurethan-No-Bake-Verfahren herzustellen.

Insgesamt ergaben sich vier Zweikomponenten-Bindemittelsysteme aus den Kombinationen der Kompositionen nach "Beispiel 3a" und "Beispiel 3b" mit den nachfolgend definierten MDI Mischungen 4 (Tabelle 8) und 5 (Tabelle 9).

Tabelle 5:

| MDI Mischung 1: | Masse [kg] |
|---|---|
| MDI | 75,00 |
| Solvesso | 24,70 |
| $POCl_3$ | 0,30 |

Tabelle 6:

| MDI Mischung 2: | Masse [kg] |
|---|---|
| MDI | 75,00 |
| $POCl_3$ | 0,3 |
| Tetraethyl-orthosilikat (TEOS) | 24,70 |

Tabelle 7:

| MDI Mischung 3: | Masse [kg] |
|---|---|
| MDI | 75,00 |
| $POCl_3$ | 0,3 |
| Solvesso | 24,70 |

Tabelle 8:

| MDI Mischung 4: | Masse [kg] |
|---|---|
| MDI | 75,00 |
| Tetraethyl-orthosilikat (TEOS) | 25,00 |

Tabelle 9:

| MDI Mischung 5: | Masse [kg] |
|---|---|
| MDI | 75,00 |
| Solvesso | 25,00 |

Beispiel 5: Herstellung von Gießereikernen nach dem Polyurethan-Cold-Box-Verfahren:

Jedes der insgesamt zwölf Zweikomponenten-Bindemittelsysteme aus Beispiel 4.1 wurde in üblicher Weise zur Herstellung eines Gießereikerns nach dem Polyurethan-Cold-Box-Verfahren eingesetzt.

Die erhaltenen Gießereikerne erfüllten sämtliche physikalischen Anforderungen.

Die Zerfallseigenschaften der Gießereikerne wurden als besonders günstig bewertet.

Vergleichs-Beispiel 6: Herstellung von Gießereikernen nach dem Polyurethan-No-Bake-Verfahren:

Jedes der vier Zweikomponenten-Bindemittelsysteme aus Beispiel 4.2 wurde in üblicher Weise zur Herstellung eines Gießereikerns nach dem Polyurethan-No-Bake-Verfahren eingesetzt.

Die erhaltenen Gießereikerne erfüllten sämtliche physikalischen Anforderungen.

Die Zerfallseigenschaften der Gießereikerne wurden als besonders günstig bewertet.

**Analytische Methoden:**

Methode 1: Untersuchung zur Einschätzung des pH-Werts einer Probenmischung (z.B. Grundmischung, Reaktionsmischung oder Phenolharz-Komposition)

20 g einer nach Probenmischung werden mit 160 g einer Mischung aus 20 g Wasser und 140 g Ethanol p.a. versetzt und durch Rühren homogenisiert. Die so erhaltene Lösung wird auf 20 °C temperiert und der pH-Wert mittels eines pH-Meters, zum Beispiel von der Firma Schott, Modell CG 842, bestimmt.

Methode 2: Bestimmung des Gehalts an freiem Formaldehyd in [%]

Benötigte Lösungen:

| | |
|---|---|
| "IPA/Wasser": | Mischung aus iso-Propanol (IPA) (Reinheitsgrad: p.A.) und dest. Wasser Mischverhältnis *iso*-Propanol:$H_2O$ = 3:1) |
| KCN Lösung | Wässrige KCN-Lösung (KCN-Konzentration: 0.1 mol/l) |
| Phosphat Puffer Lösung: | Herstellung:<br>348g $K_2HPO_4$ und 136g $KH_2PO_4$ in einem 1L-Messkolben vorlegen, mit deionisiertem Wasser auf 1 L auffüllen und mischen bis eine klare Lösung entsteht. |
| Borat Puffer Lösung: | Herstellung:<br>76,4g $K_2B_4O_7x2H_2O$ (Reinheitsgrad: p.A.) in einem 1L-Messkolben vorlegen, mit deionisiertem Wasser auf 1 L auffüllen und mischen bis eine klare Lösung entsteht. |
| $Hg(NO_3)_2$ Lösung: | Wässrige $Hg(NO_3)_2$ Lösung ($Hg(NO_3)_2$-Konzentration: 0.05 mol/l) |
| Indikatorlösung: | Lösung von Diphenylcarbazon in Methanol (Diphenylcarbazon-Konzentration: 1 Gew.-%) |

Durchführung:

Bei der Durchführung der Methode ist darauf zu achten, dass die Probeneinwaage entsprechend dem erwarteten Formaldehyd-Gehalt und vorzugsweise so gewählt wird, dass für die Titration ca. 10-20 ml $Hg(NO_3)_2$ Lösung gebraucht werden. Die folgende Tabelle gibt Richtwerte für das zu wählende Probengewicht:

| Erwarteter Formaldehyd Gehalt [%] | Probengewicht [g] |
|---|---|
| < 0,05 % | > 10 g |
| 0,05-0,5% | 10-3 g |
| 0,5-1,0% | 3-2 g |

Messung:

Bestimmung des Blindwerts:

Vor jeder Messung muss ein Blindwert bestimmt werden. Hierzu werden in einem 400 ml Becherglas 100 ml "IPA/Wasser" vorgelegt. Es wird mit einem Magnetrührer gemischt und zuerst 40 ml Borat Puffer Lösung, dann 20 ml KCN Lösung zugegeben. Nach zwei Minuten werden 5 ml Phosphat Puffer Lösung und 3-5 Tropfen Indikatorlösung zugegeben, sodass eine Färbung der Lösung beobachtet wird.

Titriert wird mit einer 0,05 molaren, wässrigen $Hg(NO_3)_2$ Lösung. Der Endpunkt der Titration ist am Farbumschlag von Pink/Orange nach Violett zu erkennen. Die Farbe sollte nach Erreichen des Endpunktes für mindestens 10 Sekunden stabil sein.

Der Verbrauch an 0,05 M $Hg(NO_3)_2$ Lösung wird als "Blindwert" notiert.

Bestimmung des Probengewichts und des Verbrauchs an Titrationslösung:

Die Probe wird mit Hilfe einer Analysenwaage in einem 400 ml Becherglas eingewogen (= Probengewicht) und in 100 ml "IPA/Wasser" aufgelöst. Es wird mit einem Magnetrührer gemischt und zuerst 40 ml Borat Puffer Lösung, dann 20 ml KCN Lösung zugegeben. Der pH-Wert der Lösung sollte im Bereich um 9,3 liegen.
Die Reaktionszeit wird gemessen ab Zugabe Moment der KCN Lösung und beträgt 2 Minuten.
Am Ende der zweiminütigen Reaktionszeit werden 5 ml Phosphat Puffer Lösung und 3-5 Tropfen Indikatorlösung zugegeben, sodass eine Färbung der Lösung beobachtet wird.
Titriert wird mit einer 0,05 molaren, wässrigen $Hg(NO_3)_2$ Lösung. Der Endpunkt der Titration ist am Farbumschlag von Pink/Orange nach Violett zu erkennen. Die Farbe sollte nach Erreichen des Endpunktes für mindestens 10 Sekunden stabil sein.
Der Verbrauch an 0,05 M $Hg(NO_3)_2$ Lösung wird als "Verbrauchswert" notiert.

**Berechnung:**

Der Gehalt an freiem Formaldehyd in [Gew.-%] wird nach folgender Formel berechnet:

$$\text{Freies Formaldehyd [Gew.-\%]} = \frac{\text{(Blindwert [ml] – Verbrauchswert [ml]) x 0,294 [g/ml]}}{\text{Probengewicht [g]}}$$

**Patentansprüche**

1. Phenolharz-Komposition zur Verwendung im Polyurethan-Cold-Box-Verfahren, umfassend

    - ein ortho-kondensiertes phenolisches Resol mit veretherten und/oder freien Methylolgruppen in einer Gesamtmenge von 40 bis 60 Gew.-%, bezogen auf die Gesamtmasse der Phenolharz-Komposition,
    - freies Formaldehyd in einer Menge von weniger als 0,1 Gew.-%, bezogen auf die Gesamtmasse der Phenolharz-Komposition,
    - ein oder mehrere Reaktionsprodukte von Formaldehyd mit einer oder mehreren C-H-aciden Eduktverbindungen, wobei die oder zumindest eine der C-H-aciden Eduktverbindungen eine zur Enolatbildung befähigte Carbonylverbindung ist,
    - sonstige Bestandteile in einer Gesamtmenge von mindestens 38 Gew.-%, wobei die Menge an Wasser in der Phenolharz-Komposition nicht größer ist als 1,0 Gew.-%, jeweils bezogen auf die Gesamtmasse der Phenolharz-Komposition.

2. Phenolharz-Komposition nach Anspruch 1, wobei die Gesamtmenge von Reaktionsprodukten von Formaldehyd mit einer oder mehreren C-H-aciden Eduktverbindungen größer ist als 0,1 Gew.-%.

3. Phenolharz-Komposition nach einem der vorangehenden Ansprüche, wobei die sonstigen Bestandteile umfassen

    - eine oder mehrere C-H acide Verbindungen, wobei bevorzugt die oder zumindest eine der C-H-aciden Verbindungen identisch ist mit der C-H-aciden Eduktverbindung des oder eines der Reaktionsprodukte,

    und/oder

    - ein Lösungsmittel ausgewählt aus der Gruppe bestehend aus Fettsäurealkylester, Alkylsilikate, Alkylsilikat-Oligomeren und deren Gemische.

4. Phenolharz-Komposition nach einem der vorangehenden Ansprüche, wobei die oder zumindest eine der C-H-aciden Eduktverbindungen eine β-Dicarbonylverbindung ist.

5. Phenolharz-Komposition nach einem der vorangehenden Ansprüche, wobei die oder zumindest eine der C-H-aciden Eduktverbindungen ausgewählt ist aus der Gruppe bestehend aus Dialkylmalonat, vorzugsweise Diethylmalonat und Dimethylmalonat.

6. Phenolharz-Komposition nach einem der vorangehenden Ansprüche, umfassend

- ein ortho-kondensiertes phenolisches Resol mit veretherten und/oder freien Methylolgruppen in einer Gesamtmenge von 40 bis 60 Gew.-%,
- freies Formaldehyd in einer Menge von weniger als 0,1 Gew.-%, bevorzugt weniger als 0,08 Gew.-%, besonders bevorzugt weniger als 0,05 Gew.-%, jeweils bezogen auf die Gesamtmasse der Phenolharz-Komposition,
- ein oder mehrere Reaktionsprodukte von Formaldehyd mit einer oder mehreren C-H-aciden Eduktverbindungen,
- sonstige Bestandteile in einer Gesamtmenge von mindestens 38 Gew.-%, wobei die sonstigen Bestandteile umfassen
- ein Lösungsmittel ausgewählt aus der Gruppe bestehend aus Fettsäurealkylester, Alkylsilikate, Alkylsilikat-Oligomere und deren Gemische.

**7.** Zweikomponenten-Bindemittelsystem zur Verwendung im Polyurethan-Cold-Box-Verfahren, bestehend aus

- einer Phenolharz-Komposition nach einem der vorangehenden Ansprüche als Phenolharz-Komponente und
- einer Polyisocyanat-Komponente umfassend ein Polyisocyanat mit mindestens zwei Isocyanat-Gruppen pro Molekül.

**8.** Verwendung einer C-H-aciden Verbindung als Formaldehyd-Fänger zur Herstellung einer Phenolharz-Komposition zur Verwendung im Polyurethan-Cold-Box-Verfahren, wobei die C-H-acide Verbindung eine zur Enolatbildung befähigte Carbonylverbindung ist.

**9.** Verwendung einer C-H-aciden Verbindung nach Anspruch 8 zur Herstellung einer Phenolharz-Komposition zur Verwendung im Polyurethan-Cold-Box-Verfahren, als

(i) Formaldehyd-Fänger
und gleichzeitig als
(ii) Mittel zur Beschleunigung des Zerfalls des Polyurethan-Cold-Box-Harzes.

**10.** Verfahren zur Herstellung einer Phenolharz-Komposition, mit folgenden Schritten:

- Herstellen oder Bereitstellen einer Grundmischung umfassend

ein ortho-kondensiertes phenolisches Resol mit veretherten und/oder freien Methylolgruppen
sowie
freies Formaldehyd in einer Menge von mehr als 0,25 Gew.-%, bevorzugt von mehr als 0,35 Gew.-%, besonders bevorzugt von mehr als 0,45 Gew.-%, bezogen auf die Gesamtmasse der Grundmischung,
wobei die Grundmischung nicht mehr als 2 Gew.-% Wasser enthält, vorzugsweise nicht mehr als 1 Gew.-%,

- Vermischen der Grundmischung mit einer oder mehreren C-H-aciden Verbindungen zu einer Reaktionsmischung, wobei die oder zumindest eine der C-H-aciden Verbindungen eine zur Enolatbildung befähigte Carbonylverbindung ist, und Reagieren lassen des freien Formaldehyds mit der bzw. den mehreren C-H-aciden Verbindungen unter Bildung eines bzw. mehrerer Reaktionsprodukte, wobei die C-H-aciden Verbindungen insgesamt im molaren Überschuss vorliegen bezogen auf die Gesamtmenge an freiem Formaldehyd in der Mischung,

wobei die Reaktionsmischung nicht mehr als 2 Gew.-% Wasser enthält, vorzugsweise nicht mehr als 1 Gew.-%,
und anschließend

- Zugeben sonstiger Bestandteile, sodass die Phenolharz-Komposition resultiert, vorzugsweise eine Phenolharz-Komposition nach einem der Ansprüche 1 bis 6.

**11.** Verfahren nach Anspruch 10,

wobei die Herstellung der Grundmischung den folgenden Schritt umfasst:

- Umsetzen eines oder mehrerer Phenol-Monomere mit Formaldehyd, wobei das molare Verhältnis der

Gesamtmengen an Formaldehyd zu Phenol-Monomeren im Bereich von 1,3:1 bis 2:1 liegt

und/oder
wobei die Reaktion des freien Formaldehyds mit der bzw. den mehreren C-H-ciden Verbindungen unter Bildung eines bzw. mehrerer Reaktionsprodukte bei einer Temperatur im Bereich von 80 bis 126 °C erfolgt, vorzugweise bei einer Temperatur im Bereich von 80 bis 100 °C
und/oder
wobei das molare Verhältnis der Gesamtmenge an C-H-aciden Verbindungen zur Gesamtmenge an Formaldehyd in der Reaktionsmischung größer ist als 2:1, vorzugsweise größer als 3:1.

**12.** Verfahren nach einem der Ansprüche 10 und 11, wobei die Reaktion des freien Formaldehyds mit der bzw. den mehreren C-H aciden Verbindungen unter Bildung eines bzw. mehrerer Reaktionsprodukte zumindest durchgeführt wird, bis

50 Mol-% des in der Grundmischung vorhandenen freien Formaldehyds umgesetzt sind, vorzugsweise bis 70 Mol-% des in der Grundmischung vorhandenen freien Formaldehyds umgesetzt sind
und/oder
in der Reaktionsmischung der Anteil an freiem Formaldehyd kleiner ist als 0,2 Gewichts-%, bevorzugt weniger als 0,16 Gew.-%, besonders bevorzugt weniger als 0,1 Gew.-%, jeweils bezogen auf die Gesamtmasse der Reaktionsmischung.

**13.** Verfahren zur Herstellung eines Zweikomponenten-Bindemittelsystems, vorzugsweise nach Anspruch 7, umfassend die Schritte:

- Bereitstellen einer Phenolharz-Komposition nach einem der Ansprüche 1 bis 6 oder Herstellen einer Phenolharz-Komposition nach einem Verfahren gemäß einem der Ansprüche 10 bis 12, als Phenolharz-Komponente und Kombinieren der bereitgestellten oder hergestellten Phenolharz-Komponente mit
- einer Polyisocyanat-Komponente umfassend ein Polyisocyanat mit mindestens zwei Isocyanat-Gruppen pro Molekül,

so dass das Zweikomponenten-Bindemittelsystem resultiert.

**14.** Verfahren zur Herstellung eines Speisers, einer Gießereiform oder eines Gießereikerns aus einer Formstoffmischung, wobei die Formstoffmischung mittels eines Zweikomponenten-Bindemittelsystems nach Anspruch 7 gebunden wird.

**15.** Speiser, Gießereiform oder Gießereikern, herstellbar gemäß einem Verfahren nach Anspruch 14.

## Claims

**1.** Phenolic resin composition for use in the polyurethane cold-box process, comprising

- an ortho-condensed phenolic resol having etherified and/or free methylol groups in a total amount of 40 to 60% by weight based on the total mass of the phenolic resin composition,
- free formaldehyde in an amount of less than 0.1% by weight based on the total weight of the phenolic resin composition,
- one or more reaction products of formaldehyde with one or more C-H-acidic reactant compounds, wherein the or at least one of the C-H-acidic reactant compounds is a carbonyl compound capable of enolate formation,
- other constituents in a total amount of at least 38% by weight,

wherein the amount of water in the phenolic resin composition is not more than 1.0% by weight in each case based on the total mass of the phenolic resin composition.

**2.** Phenolic resin composition according to Claim 1, wherein the total amount of reaction products of formaldehyde with one or more C-H-acidic reactant compounds is greater than 0.1% by weight.

**3.** Phenolic resin composition according to either of the preceding claims, wherein the other constituents comprise

- one or more C-H-acidic compounds, wherein preferably the or at least one of the C-H-acidic compounds is identical to the C-H-acidic reactant compound of the or of one of the reaction products,
and/or
- a solvent selected from the group consisting of fatty acid alkyl esters, alkyl silicates, alkyl silicate oligomers and mixtures thereof.

**4.** Phenolic resin composition according to any of the preceding claims, wherein the or at least one of the C-H-acidic reactant compounds is a β-dicarbonyl compound.

**5.** Phenolic resin composition according to any of the preceding claims, wherein the or at least one of the C-H-acidic reactant compounds is selected from the group consisting of dialkyl malonate, preferably diethyl malonate and dimethyl malonate.

**6.** Phenolic resin composition according to any of the preceding claims, comprising

- an ortho-condensed phenolic resol having etherified and/or free methylol groups in a total amount of from 40 to 60% by weight,
- free formaldehyde in an amount of less than 0.1% by weight, preferably less than 0.08% by weight, particularly preferably less than 0.05% by weight, in each case based on the total mass of the phenolic resin composition,
- one or more reaction products of formaldehyde with one or more C-H-acidic reactant compounds,
- other constituents in a total amount of at least 38% by weight,
wherein the other constituents comprise
- a solvent selected from the group consisting of fatty acid alkyl esters, alkyl silicates, alkyl silicate oligomers and mixtures thereof.

**7.** Two-component binder system for use in the polyurethane cold-box process, consisting of

- a phenolic resin composition according to any of the preceding claims as a phenolic resin component
and
- a polyisocyanate component comprising a polyisocyanate having at least two isocyanate groups per molecule.

**8.** Use of a C-H-acidic compound as a formaldehyde scavenger for producing a phenolic resin composition for use in the polyurethane cold-box process, wherein the C-H-acidic compound is a carbonyl compound capable of enolate formation.

**9.** Use of a C-H-acidic compound according to Claim 8 for producing a phenolic resin composition for use in the polyurethane cold-box process, as

(i) a formaldehyde scavenger
and simultaneously as
(ii) a means for accelerating the decomposition of the polyurethane cold box resin.

**10.** Process for producing a phenolic resin composition comprising the steps of:

- producing or providing a base mixture comprising

  an ortho-condensed phenolic resol having etherified and/or free methylol groups
  and
  free formaldehyde in an amount of more than 0.25% by weight, preferably of more than 0.35% by weight, particularly preferably of more than 0.45% by weight, based on the total weight of the base mixture,
  wherein the base mixture contains not more than 2% by weight of water, preferably not more than 1% by weight,

- mixing the base mixture with one or more C-H-acidic compounds to afford a reaction mixture, wherein the or at least one of the C-H-acidic compounds is a carbonyl compound capable of enolate formation, and reacting the free formaldehyde with the one or more C-H-acidic compounds to form one or more reaction products, wherein the C-H-acidic compounds are altogether present in a molar excess based on the total amount of free formaldehyde in the mixture, wherein the reaction mixture contains not more than 2% by weight of water,

preferably not more than 1% by weight,
and subsequently
- adding other constituents so that the phenolic resin composition results, preferably a phenolic resin composition according to any of Claims 1 to 6.

**11.** Process according to Claim 10,

wherein the production of the base mixture comprises the steps of:

- reacting one or more phenolic monomers with formaldehyde,
wherein the molar ratio of the total amounts of formaldehyde to phenol monomers is in the range from 1.3:1 to 2:1

and/or
wherein the reaction of the free formaldehyde with the one or more C-H-acidic compounds to form one or more reaction products is effected at a temperature in the range from 80 to 126°C, preferably at a temperature in the range from 80 to 100°C
and/or
wherein the molar ratio of the total amount of C-H-acidic compounds to the total amount of formaldehyde in the reaction mixture is greater than 2:1, preferably greater than 3:1.

**12.** Process according to either of Claims 10 and 11, wherein the reaction of the free formaldehyde with the one or more C-H-acidic compounds to form one or more reaction products is at least performed until 50 mol% of the free formaldehyde present in the base mixture have reacted, preferably until 70 mol% of the free formaldehyde present in the base mixture have reacted,
and/or
in the reaction mixture the proportion of free formaldehyde is less than 0.2% by weight, preferably less than 0.16% by weight, particularly preferably less than 0.1% by weight, in each case based on the total mass of the reaction mixture.

**13.** Process for producing a two-component binder system, preferably according to Claim 7, comprising the steps of:

- providing a phenolic resin composition according to any of Claims 1 to 6 or producing a phenolic resin composition by a process according to any of Claims 10 to 12 as a phenolic resin component
and combining the provided or produced phenolic resin component with
- a polyisocyanate component comprising a polyisocyanate having at least two isocyanate groups per molecule,

so that the two-component binder system results.

**14.** Process for producing a feeder, a foundry mold or a foundry core from a molding material mixture, wherein the molding material mixture is bound by means of a two-component binder system according to Claim 7.

**15.** Feeder, foundry mold or foundry core, producible by a process according to Claim 14.

**Revendications**

**1.** Composition de résine phénolique destinée à être utilisée dans le procédé boîte froide de polyuréthane, comprenant

- un résol phénolique ortho-condensé avec des groupes méthylol éthérifiés et/ou libres en une quantité totale de 40 à 60 % en poids par rapport au poids total de la composition de résine phénolique,
- du formaldéhyde libre en une quantité inférieure à 0,1 % en poids par rapport au poids total de la composition de résine phénolique,
- un ou plusieurs produits de réaction de formaldéhyde avec un ou plusieurs composés de départ C-H-acides, dans laquelle le ou au moins un des composés de départ C-H-acides est un composé carbonyle susceptible de former des énolates,
- d'autres constituants en une quantité totale d'au moins 38 % en poids,

dans laquelle la quantité d'eau dans la composition de résine phénolique est inférieure ou égale à 1,0 % en poids respectivement par rapport au poids total de la composition de résine phénolique.

2. Composition de résine phénolique selon la revendication 1, dans laquelle la quantité totale de produits de réaction de formaldéhyde avec un ou plusieurs composés de départ C-H-acides est supérieure à 0,1 % en poids.

3. Composition de résine phénolique selon l'une quelconque des revendications précédentes, dans laquelle les autres constituants comprennent

   - un ou plusieurs composés C-H-acides, dans laquelle de manière préférée le ou au moins un des composés C-H-acides est identique au composé de départ C-H-acide du ou d'un des produits de réaction,
   et/ou
   - un solvant choisi parmi le groupe constitué d'esters d'alkyle d'acides gras, de silicates d'alkyle, d'oligomères de silicate d'alkyle et de leurs mélanges.

4. Composition de résine phénolique selon l'une quelconque des revendications précédentes, dans laquelle le ou au moins un des composés de départ C-H-acides est un composé $\beta$-dicarbonyle.

5. Composition de résine phénolique selon l'une quelconque des revendications précédentes, dans laquelle le ou au moins un des composés de départ C-H-acides est choisi parmi le groupe constitué de malonate de dialkyle, de préférence de malonate de diéthyle et de malonate de diméthyle.

6. Composition de résine phénolique selon l'une quelconque des revendications précédentes, comprenant

   - un résol phénolique ortho-condensé avec des groupes méthylol éthérifiés et/ou libres en une quantité totale de 40 à 60 % en poids,
   - du formaldéhyde libre en une quantité inférieure à 0,1 %, de manière préférée inférieure à 0,08 % en poids, de manière particulièrement préférée inférieure à 0,05 % en poids, respectivement par rapport au poids total de la composition de résine phénolique,
   - un ou plusieurs produits de réaction de formaldéhyde avec un ou plusieurs composés de départ C-H-acides,
   - d'autres constituants en une quantité totale d'au moins 38 % en poids,
   dans laquelle les autres constituants comprennent
   - un solvant choisi parmi le groupe constitué d'esters d'alkyle d'acides gras, de silicates d'alkyle, d'oligomères de silicate d'alkyle et de leurs mélanges.

7. Système de liant à deux composants destiné à être utilisé dans le procédé boîte froide de polyuréthane, constitué

   - d'une composition de résine phénolique selon l'une quelconque des revendications précédentes, en tant que composant de résine phénolique
   et
   - un composant de polyisocyanate comprenant un polyisocyanate avec au moins deux groupes isocyanate par molécule.

8. Utilisation d'un composé C-H-acide en tant que capteur de formaldéhyde pour fabriquer une composition de résine phénolique destinée à être utilisée dans le procédé boîte froide de polyuréthane, dans laquelle le composé C-H-acide est un composé carbonyle susceptible de former des énolates.

9. Utilisation d'un composé C-H-acide selon la revendication 8 pour fabriquer une composition de résine phénolique destinée à être utilisée dans le procédé boîte froide de polyuréthane, en tant

   (i) que capteur de formaldéhyde,
   et dans le même temps en tant
   (ii) que moyen pour accélérer la décomposition de la résine de boîte froide de polyuréthane.

10. Procédé de fabrication d'une composition de résine phénolique avec des étapes suivantes :

   - de fabrication ou de fourniture d'un mélange de base comprenant

- - un résol phénolique ortho-condensé avec des groupes méthylol éthérifiés et/ou libres
ainsi
- - que du formaldéhyde libre en une quantité supérieure à 0,25 % en poids, de manière préférée supérieure à 0,35 % en poids, de manière particulièrement préférée supérieure à 0,45 % en poids, par rapport au poids total du mélange de base,
dans lequel le mélange de base ne contient pas plus de 2 % en poids d'eau, de préférence pas plus de 1 % en poids,

- de mélange du mélange de base à un ou plusieurs composés C-H-acides pour obtenir un mélange de réaction, dans lequel le ou au moins un des composés C-H-acides est un composé carbonyle susceptible de former des énolates, et de mise en réaction du formaldéhyde libre avec le ou les plusieurs composés C-H-acides en formant un ou plusieurs produits de réaction, dans lequel les composés C-H-acides sont présents globalement en excès molaire par rapport à la quantité totale de formaldéhyde libre dans le mélange,
dans lequel le mélange de réaction ne contient pas plus de 2 % en poids d'eau, de préférence pas plus de 1 % en poids,
puis
- d'ajout d'autres constituants si bien que la composition de résine phénolique en résulte, de préférence une composition de résine phénolique selon l'une quelconque des revendications 1 à 6.

**11.** Procédé selon la revendication 10,

dans lequel la fabrication du mélange de base comprend l'étape suivante :

- de transformation d'un ou de plusieurs monomères phénoliques avec du formaldéhyde,

dans lequel le rapport molaire entre les quantités totales de formaldéhyde par rapport aux monomères phénoliques se situe dans la plage de 1,3:1 à 2:1
et/ou
dans lequel la réaction du formaldéhyde libre avec le ou les plusieurs composés C-H-acides est effectuée en obtenant un ou plusieurs produits de réaction à une température dans la plage de 80 à 126 °C, de préférence à une température dans la plage de 80 à 100 °C
et/ou
dans lequel le rapport molaire de la quantité totale en composés C-H-acides par rapport à la quantité totale de formaldéhyde dans le mélange de réaction est supérieur à 2:1, de préférence supérieur à 3:1.

**12.** Procédé selon l'une quelconque des revendications 10 et 11, dans lequel la réaction du formaldéhyde libre avec le ou les plusieurs composés C-H-acides est mise en œuvre au moins en obtenant un ou plusieurs produits de réaction jusqu'à ce que 50 % mol. du formaldéhyde libre présent dans le mélange de base soient transformés, de préférence jusqu'à ce que 70 % mol. du formaldéhyde libre présent dans le mélange de base soient transformés
et/ou
la fraction en formaldéhyde libre dans le mélange de réaction soit inférieure à 0,2 % en poids, de manière préférée inférieure à 0,16 % en poids, de manière particulièrement préférée inférieure à 0,1 % en poids, respectivement par rapport au poids total du mélange de réaction.

**13.** Procédé de fabrication d'un système de liant à deux composants, de préférence selon la revendication 7, comprenant les étapes

- de fourniture d'une composition de résine phénolique selon l'une quelconque des revendications 1 à 6 ou de fabrication d'une composition de résine phénolique selon un procédé selon l'une quelconque des revendications 10 à 12, en tant que composant de résine phénolique,
et de combinaison du composant de résine phénolique fourni ou fabriqué à
- un composant de polyisocyanate comprenant un polyisocyanate avec au moins deux groupes isocyanate par molécule

de sorte qu'il en résulte le système de liant à deux composants.

**14.** Procédé de fabrication d'un dispositif d'alimentation, d'un moule de fonderie ou d'un noyau de fonderie à partir d'un mélange de matériaux de moulage, dans lequel le mélange de matériaux de moulage est lié au moyen d'un système

de liant à deux composants selon la revendication 7.

**15.** Dispositif d'alimentation, moule de fonderie ou noyau de fonderie pouvant être fabriqués selon un procédé selon la revendication 14.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 3485797 A
- EP 1057554 A
- EP 771599 A
- DE PS2759262 C
- EP 0771559 A
- US 5358748 A
- US 4273179 A
- FR 2948307
- US 20130292083 A1
- DE 102004057671 A1
- US 5552488 A
- FR 1056171 A
- JP 49025108 A
- GB 1121649 A
- EP 1057554 B1
- US 20110015341 A1
- EP 0138448 B1
- US 5160503 A
- US 2212506 A
- US 5795933 A


### In der Beschreibung aufgeführte Nicht-Patentliteratur


- *CHEMICAL ABSTRACTS,* 64742-94-5
- *J. of Trop.forest sc.,* vol. 24 (3), 348
- ortho-kondensiertes phenolisches Resol'' (englisch: ortho-condensed phenolic resole) umfasst gemäß dem üblichen fachmännischen Verständnis Verbindungen, wie sie in dem Lehrbuch. **BEGRIFF.** Phenolic Resins: A Century of progress. Herausgeber: L. Pilato, Verlag: Springer, 2010
- **BAYER/WALTER.** Lehrbuch der organischen Chemie. 1984, 307
- **H. GAULT ; A. ROESCH.** *memoires présentés soc. chim.,* 1987, vol. 148, 1410